# EUROPEAN PATENT SPECIFICATION

(11) **EP 1 607 319 B1**
(45) Date of publication and mention of the grant of the patent: **30.01.2008**
(21) Application number: 04014362.0
(22) Date of filing: 18.06.2004
(51) Int. Cl.: B62K 25/08, B62K 25/28, B60G 17/005, F16F 9/06, F16F 9/44, F16F 9/46

(54) **Shock absorber for a bicycle**
Stossdämpfer für ein Fahrrad
Amortisseur pour bicyclette

(43) Date of publication of application: 21.12.2005
(73) Proprietor: Huang, Tan-Cheng, Taichung, Taiwan 403 (TW)
(72) Inventor: Huang, Tan-Cheng, Taichung, Taiwan 403 (TW)
(74) Representative: Hauck Patent- und Rechtsanwälte

(56) References cited:
- EP-A- 1 234 760
- US-A- 4 679 811
- US-A- 5 320 375
- US-A- 5 354 085
- US-A- 5 634 653
- US-A- 5 909 890
- US-A- 6 120 049
- US-A1- 2003 001 358
- US-A1- 2003 132 602
- US-B1- 6 217 049
- US-B1- 6 382 370

## Description

### Field of the Invention

The present invention relates to a shock absorber, and more particularly to a shock absorber that is used on the bike and the mechanical structure.

### Description of the Prior Arts

The conventional shock absorber used on the bike usually uses inner spring cooperating with cylinder base and other components to produce a shock-absorbing effect (whether the operation space for the inner spring is filled with hydraulic oil is not the essential condition of the present invention, further discussions on this matter would be omitted). A conventional shock absorber, used on the bike, includes basement, axial shaft and shock-absorbing spring, which are to be explained below. The basement is mounted to the fork of the bike, while the axial shaft is mounted on the frame of the bike. The shock-absorbing spring is biased between the basement and the axial shaft. This kind of shock absorber has been used on different kinds of mechanisms and bikes, yet there are still some defects need to be improved as follows:

First, the conventional shock absorber only has the buffering function, and the buffering function cannot be disabled. Thereby, when riding up a slope, the up-and-down motion of the shock absorber will increase the drag force because the motion of the shock absorber counteracts the pressing force applied by the user.

Second, the conventional shock absorber only has the buffering function, but the buffering function cannot be disabled. When riding down a slope, the up-and-down motion of the shock absorber will change the front tilt angle of the bike, especially when the front shocker is moving downward, the front tilt angle of the bike is much increased. Thereby, there is a danger of falling over.

To overcome the aforementioned disadvantages, US Pt No. 5320375 and 2003/0001358A1 disclose a bicycle shock absorber according to the preamble of claim 1 whose function can be selectively disabled or enabled. However, the bicycle shock absorber of the US Pt No. 5320375 and 2003/0001358A1 is a hydraulic shock absorber. However, the hydraulic shock absorber must be precisely assembled, otherwise liquid leakage will occur, therefore, it is difficult to assemble. And the respective components of the hydraulic shock absorber must be leak-proof, therefore, the production cost will be relatively high.

The present invention has arisen to mitigate and/or obviate the afore-described disadvantages.

### SUMMARY OF THE INVENTION

The primary object of the present invention is to provide a shock absorber for a bicycle, the shock-absorbing function of which can be enabled/disabled during movement. The shock absorber includes a basement, a clutch assembly, a control assembly and a shock-absorbing spring, the shock-absorbing spring provides damper elastic force for the respective components of the shock absorber. The shock-absorbing function can be disenabled when riding up a slope, so as to prevent the drag force being increased by the up and down motion of the shock absorber. The shock-absorbing function can be enabled when riding on a horizontal road, and it can be disenabled again when riding down a slope, so as to prevent the increase of the front tilt angle of the bike and leading to turnover.

The present invention will become more obvious from the following description when taken in connection with the accompanying drawings, which show, for purpose of illustrations only, the preferred embodiments in accordance with the present invention.

### BRIEF DESCRIPTION OF THE DRAWINGS

Fig. 1 is an exploded view of a shock absorber for a bicycle in accordance with a first embodiment of the present invention;
Fig. 2 is a cross sectional view in accordance with a first embodiment of the present invention for showing the shock absorber in a state of being unlocked;
Fig. 3 is another cross sectional view in accordance with a first embodiment of the present invention for showing the shock absorber in a state of being unlocked;
Fig. 4 is a cross sectional view in accordance with a first embodiment of the present invention for showing the shock absorber in a state of being locked;
Fig. 5 is another cross sectional view in accordance with a first embodiment of the present invention for showing the shock absorber in a state of being locked;
Fig. 6 is an exploded view of a shock absorber in accordance with a second embodiment of the present invention;
Fig. 7 is a cross sectional view of the shock absorber for a bicycle in accordance with a second embodiment of the present invention;
Fig. 8 is a cross sectional view in accordance with a second embodiment of the present invention for showing the shock absorber in a state of being unlocked;
Fig. 9 is a cross sectional view in accordance with a second embodiment of the present invention for showing the shock absorber in a state of being locked;
Fig. 10 is an exploded view of the shock absorber for a bicycle in accordance with a third embodiment of the present invention;
Fig. 11 is a cross sectional view in accordance with a third embodiment of the present invention for showing the shock absorber in a state of being unlocked;
Fig. 12 is another cross sectional view in accordance with a third embodiment of the present invention for showing the shock absorber in a state of being unlocked;
Fig. 13 is a cross sectional view in accordance with a third embodiment of the present invention for showing the shock absorber in a state of being locked;
Fig. 14 is another cross sectional view in accordance with a third embodiment of the present invention for showing the shock absorber in a state of being locked;
Fig. 15 is a cross sectional view of the shock absorber for a bicycle in accordance with a fourth embodiment of the present invention;
Fig. 16 is a cross sectional view in accordance with a fourth embodiment of the present invention for showing the shock absorber in a state of being locked;
Fig. 17 is another cross sectional view in accordance with a fourth embodiment of the present invention for showing the shock absorber in a state of being locked;
Fig. 18 is a cross sectional view of the shock absorber for a bicycle in accordance with a fifth embodiment of the present invention;
Fig. 19 is a cross sectional view in accordance with a fifth embodiment of the present invention for showing the shock absorber in a state of being unlocked;
Fig. 20 is a cross sectional view in accordance with a fifth embodiment of the present invention for showing the shock absorber in a state of being locked;
Fig. 21 is a cross sectional view of the shock absorber for a bicycle in accordance with a sixth embodiment of the present invention;
Fig. 22 is a cross sectional view in accordance with a sixth embodiment of the present invention for showing the shock absorber in a state of being unlocked;
Fig. 23 is a cross sectional view in accordance with a sixth embodiment of the present invention for showing the shock absorber in a state of being locked;
Fig. 24 is a cross sectional view of the shock absorber for a bicycle in accordance with a seventh embodiment of the present invention;
Fig. 25 is a cross sectional view in accordance with a seventh embodiment of the present invention for showing the shock absorber in a state of being unlocked;
Fig. 26 is a cross sectional view of the shock absorber for a bicycle in accordance with a eighth embodiment of the present invention;
Fig. 27 is a cross sectional view in accordance with a eighth embodiment of the present invention for showing the shock absorber in a state of being unlocked;
Fig. 28 is an exploded view of the shock absorber for a bicycle in accordance with a ninth embodiment of the present invention;
Fig. 29 is a cross sectional view in accordance with a ninth embodiment of the present invention for showing the shock absorber in a state of being unlocked;
Fig. 30 is another cross sectional view in accordance with a ninth embodiment of the present invention for showing the shock absorber in a state of being unlocked;
Fig. 31 is a cross sectional view in accordance with a ninth embodiment of the present invention for showing the shock absorber in a state of being locked;
Fig. 32 is another cross sectional view in accordance with a ninth embodiment of the present invention for showing the shock absorber in a state of being locked;
Fig. 33 is an exploded view of the shock absorber for a bicycle in accordance with a tenth embodiment of the present invention;
Fig. 34 is a cross sectional view in accordance with a tenth embodiment of the present invention for showing the shock absorber in a state of being unlocked;
Fig. 35 is another cross sectional view in accordance with a tenth embodiment of the present invention for showing the shock absorber in a state of being unlocked;
Fig. 36 is a cross sectional view in accordance with a tenth embodiment of the present invention for showing the shock absorber in a state of being locked;
Fig. 37 is another cross sectional view in accordance with a tenth embodiment of the present invention for showing the shock absorber in a state of being locked;
Fig. 38 is an exploded view of the shock absorber for a bicycle in accordance with an eleventh embodiment of the present invention;
Fig. 39 is a cross sectional view in accordance with a eleventh embodiment of the present invention for showing the shock absorber in a state of being unlocked;
Fig. 40 is a partial exploded view of the shock absorber for a bicycle in accordance with a twelfth embodiment of the present invention;
Fig. 41 is a cross sectional view in accordance with a twelfth embodiment of the present invention for showing the shock absorber;
Fig. 42a is a cross sectional view of another type clutch member in accordance with the present invention;
Fig. 42b is another cross sectional view of another type clutch member in accordance with the present invention;
Fig. 42c is another cross sectional view of another type clutch member in accordance with the present invention;
Fig. 42d is another cross sectional view of another type clutch member in accordance with the present invention;
Fig. 43 is an exploded view of a cable-control handle in accordance with the present invention;
Fig. 44 is an operational view of the cable-control handle in accordance with the present invention;
Fig. 45 is a cross sectional view of the cable-control handle in accordance with the present invention;
Fig. 46a is a structural cross sectional view in accordance with the present invention, which shows the positioning bush L1 is disposed in the positioning hole of the axial tube;
Fig. 46b is another structural cross sectional view in accordance with the present invention, which shows the positioning bush L1 is disposed in the positioning hole of the axial tube;
Fig. 46c is another structural cross sectional view in accordance with the present invention, which shows the positioning bush L1 is disposed in the positioning hole of the axial tube;
Fig. 46d is another structural cross sectional view in accordance with the present invention, which shows the positioning bush L1 is disposed in the positioning hole of the axial tube;
Fig. 46e is another structural cross sectional view in accordance with the present invention, which shows the positioning bush L1 is disposed in the positioning hole of the axial tube;
Fig. 46f is another structural cross sectional view in accordance with the present invention, which shows the positioning bush L1 is disposed in the positioning hole of the axial tube.

### DETAILED DESCRIPTION OF THE PREFERRED EMBODIMENTS

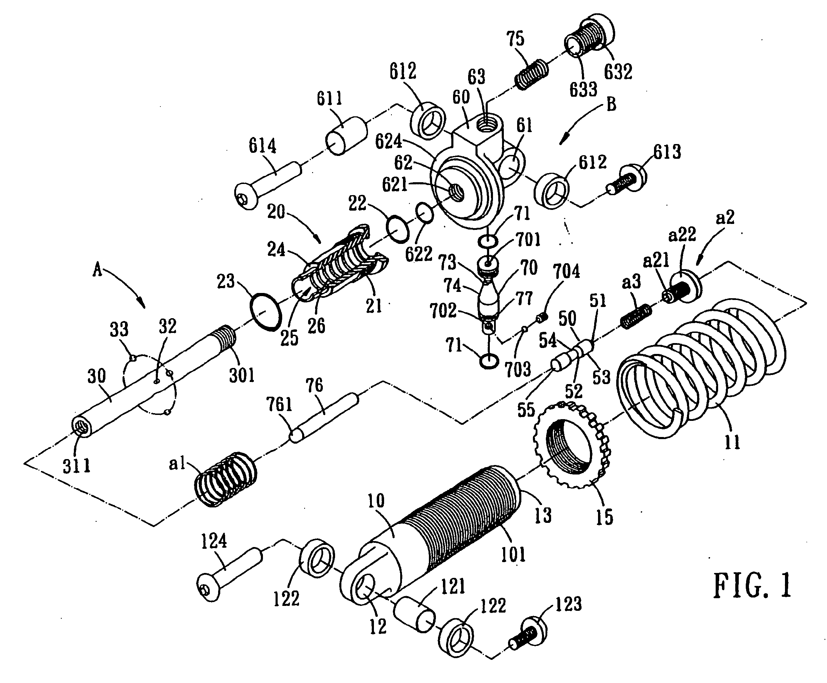

Referring to Figs. 1-3, a bike shock absorber for a bicycle in accordance with a first preferred embodiment of the present invention is shown and generally including: a basement 10, a clutch assembly A, a control assembly B, a shock-absorbing spring 11 and a buffer spring a1.

The basement 10, a first end of which is formed with a hole 12 that is interiorly provided with a sleeve 121, a jacket 122; a male screw 123 and a female screw 124 are used to position the sleeve 121 and the jacket 122 in the hole 12 of the basement 10. A second end of the basement 10 is opened with a mouth 13 that is in communication with a space 14 inside the basement 10. Plural inner threads 141 are formed in the space 14 and located adjacent to the mouth 13, while on the outer periphery of the basement 10 is defined with plural outer threads 101 that are to be screwed with an adjusting ring 15.

The clutch assembly A includes a positioning member 20, an axial tube 30, a clutch member 33 and a control element 50, wherein:

The positioning member 20 is provided at a first end thereof with plural outer threads 21 serving to mesh with the inner threads 141 in the space 14 of the basement 10. The positioning member 20 is further provided at a position adjacent to the mouth 13 of the basement 10 with an inner ring 22 and an outer ring 23. A second end of the positioning member 20 is formed with step periphery 24. A through hole 25 is defined in the positioning member 20, in the through hole 25 is further formed with plural positioning grooves 26.

The axial tube 30 is interiorly formed with a through hole 31 and serves to be inserted in the through hole 25 of the positioning member 20. An end of the through hole 25 corresponding the basement 10 is provided with plural inner threads 311, while another end of the axial tube 30 opposite to the inner threads 311 is provided with plural outer threads 301. Furthermore, at a position of the axial tube 30 corresponding to the positioning grooves 26 of the positioning member 20 is formed a positioning hole 32.

The clutch member 33 is received in the positioning hole 32 of the axial tube 30 and corresponds to the positioning grooves 26 of the positioning member 20.

The control element 50 is slidably disposed in the through hole 31 of the axial tube 30. On an end surface of the control element 50 is provided a protrusive periphery 51, and on the outer periphery of the control element 50 is formed with annular step portion 52 that divides the control element 50 into a big diameter portion 53 and a small diameter portion 54. The front periphery of the small diameter portion 54 of the annular step portion 52 is formed with an end surface 55.

The control assembly B includes a base body 60, a control shaft 70, a back-moving spring 75, an abutting member 76, a cover a2 and a control spring a3. The detail structure is explained as follows:

The base body 60 is formed at a first end with a hole 61 and in which is respectively disposed a sleeve 611 and a jacket 612. A male screw 613 and a female screw 614 are used to position the sleeve 611 and the jacket 612 in the hole 61 of the basement 60. A receiving hole 62 is formed at a second end of the base body 60 and interiorly provided with inner threads 621 for meshing with the outer threads 301 of the axial tube 30. A flange 623 is formed at the bottom of the receiving hole 62 for fixing an end of the axial tube 30. A flange 624 is formed outside the receiving hole 62 of the base body 60. The base body 60 is further formed with a control hole 63 that is perpendicular to the receiving hole 62. The control hole 63 is in communication with the end of the receiving hole 62. A flange 631 is formed at an end of the receiving hole 62, and a positioning cover 632 is screwed to another end of the receiving hole 62. An end of the positioning cover 632 is formed with a through hole 633.

The control shaft 70 is slidably received in the control hole 63 of the base body 60 via two seal rings 71. An end of the control shaft 70 is formed with step periphery 77 that is confined by the flange 631 in the control hole 63 of the base body 60. The control shaft 70 is interiorly formed with an axial hole 701 for insertion of a steel cord 72 that passes outward through the through hole 633 of the positioning cover 632 (the steel cord 72 is controlled by user). Another end of the control shaft 70 is formed with a threaded hole 702, via a washer 703 and a screw 704, the steel cord 72 is fixed in the axial hole 701 of the control shaft 70. On an outer periphery of the control shaft 70 is annularly formed with a groove 73 and an annular cone-shaped surface 74.

The back-moving spring 75 is disposed in the through hole 633 of the positioning cover 632 of the base body 60, an end of which abuts against the positioning cover 632 and another end of the back-moving spring 75 abuts against the control shaft 70.

The abutting member 76 is slidably disposed in through hole 31 of the axial tube 30. An end of the abutting member 76 is provided with an arc surface 761 that is inserted through the end of the axial tube 30 having the outer threads 301 and abuts against the groove 73 and the annular cone-shaped surface 74 of the control shaft 70, while another end of the abutting member 76 is used to abut against the end surface 55 of the small diameter portion 54 of the annular step portion 52.

The cover a2 is meshed with the inner threads 311 in the axial tube 30 of the clutch assembly A, an end of which is formed with a boss portion a21. And the cover a2 is further provided with annular periphery a22.

The control spring a3 is received in the through hole 31 of the axial tube 30 of the clutch assembly A, an end which abuts against the protrusive periphery 51 of the control element 50 of the clutch assembly A, while another end of the control spring a3 abuts against the boss portion a21 of the cover a2.

The shock-absorbing spring 11 is biased between the adjusting ring 15 of the basement 10 and the flange 624 of the base body 60 of the control assembly B.

The buffer spring a1 is exteriorly mounted on the axial tube 30, an end of which abuts against the annular periphery a22 of the cover a2 at the end of the axial tube 30 of the clutch assembly A, while another end of the buffer spring a1 abuts against the step periphery 24 of the positioning member 20.

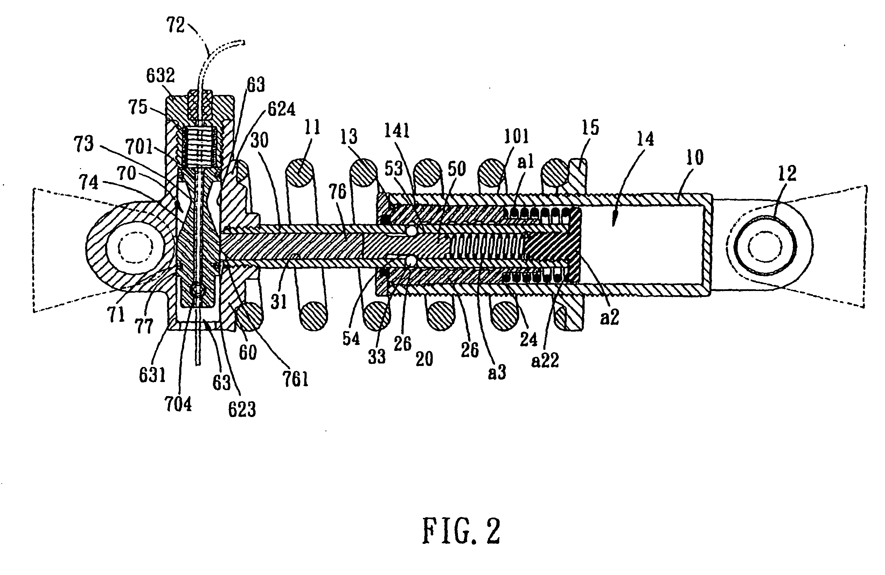

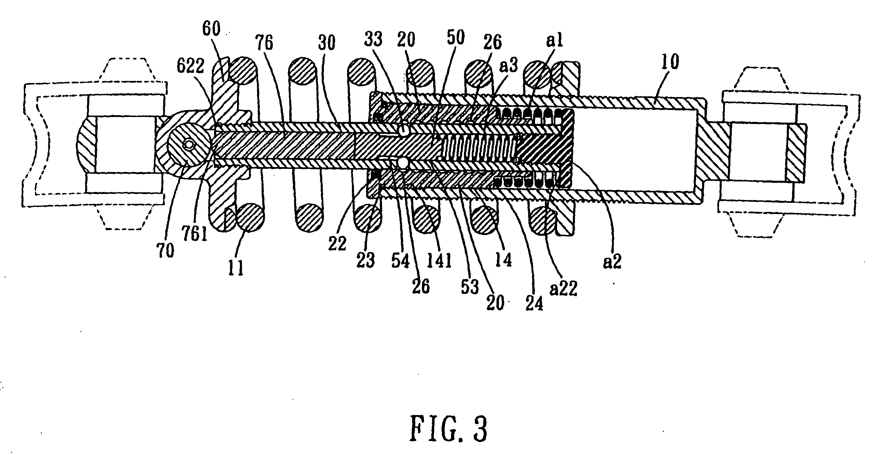

Referring particularly to Figs. 2 and 3, when want to enable the shock absorbing function of the shock absorber, the user can pull a length of the steel cord 72 out and then fix it in the axial hole 701 of the control shaft 70 (the method of pulling and fixing the steel cord 72 belongs to conventional technology, so it would not be mentioned here), so as to make the end of the control shaft 70 compress the back-moving spring 75. At this moment, the outer periphery of the control shaft 70 will abut against the arc surface 761 of the abutting member 76. Thereby, a movement of the control shaft 70 makes the arc surface 761 of the abutting member 76 raise from the groove 73 of the control shaft 70 to the big diameter portion of the annular cone-shaped surface 74, so that the abutting member 76 will move the control element 50 and compress the control spring a3. The movement of the control element 50 makes the big diameter portion 53 of the annular cone-shaped portion 52 of the control element 50 disengage from the clutch member 33 of the axial tube 30, and makes the clutch member 33 slide smoothly from the big diameter portion 53 of the annular cone-shaped portion 52 of the control element 50 into the small diameter portion 54 of the control element 50, so as to allow the axial tube 30 to move relatively to the positioning member 20. The shock of the bike can be absorbed by the shock-absorbing spring 11, while the buffer spring a1 biased between the step periphery 24 of the positioning member 20 and the annular periphery a22 of the cover a2 is employed to work as an end buffer. Thereby, the shock absorber for a bicycle in accordance with the present invention can be used on the bike or the mechanical structure.

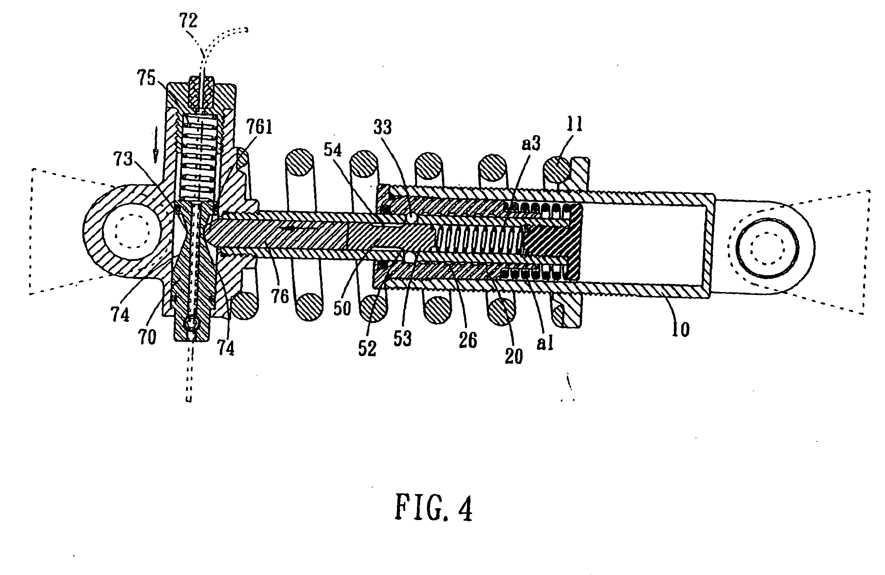

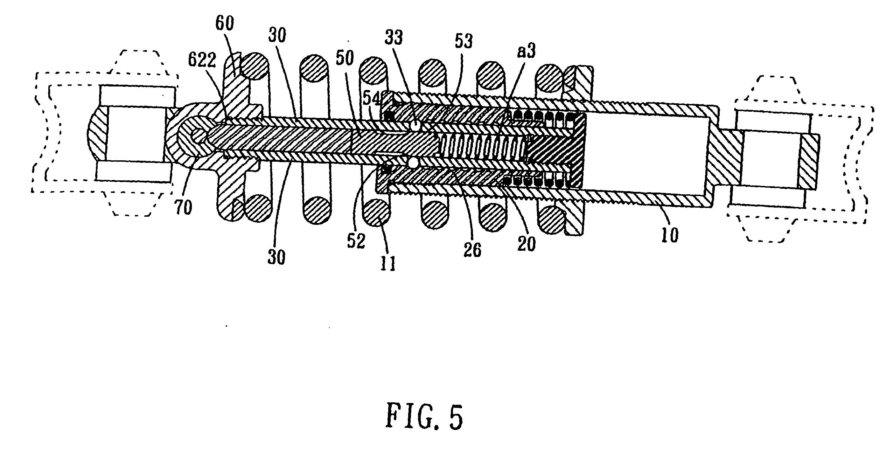

Referring to Figs. 4 and 5, when riding up a slope and wants to disable the shock-absorbing function of the shock absorber (in order avoid an increase in drag force caused by the up-and-down motion of the shock-absorber), the user can push and release a length of the steel cord 72. The control shaft 70 and the steel cord 72 will be pushed back to their original position by the back-moving spring 75. At the moment, the movement of the control shaft 70 makes the arc surface 761 of the abutting member 76 move along the annular cone-shaped surface 74 of the control shaft 70 and slide into the groove 73. Such that the abutting member 76 moves a distance away from the control element 50, and the compressing force of the control spring a3 pushes the control element 50 to move. The big diameter portion 53 of the annular step portion 52 of the control element 50 pushes the clutch member 33 to move into one of the plural positioning grooves 26 of the positioning member 20. At this moment, the shock absorber still will move up and down if the positioning groove 26 of the positioning member 20 is not meshed with the clutch member 33. During an instant period of the motion of the shock absorber, when the clutch member 33 is in alignment with one of the positioning grooves 26, the control spring a3 will instantly move the control element 50, and the big diameter portion 53 of the annular step portion 52 of the control element 50 pushes the clutch member 33 to move into the positioning groove 26 of the positioning member 20. At this moment, the positioning member 20 is locked with the axial tube 30, and thus the shock absorber is locked since the basement 10 and the control assembly B are unable to move relative to each other. Moreover, since the positioning member 20 is provided with plural positioning grooves 26, in real operation, the clutch member 33 can be pushed by the control spring a3 and engages into one of the positioning grooves 26 of the positioning member 20. That is to say that, the user is able to enable or disable the shock absorbing function of the shock absorber according to needs.

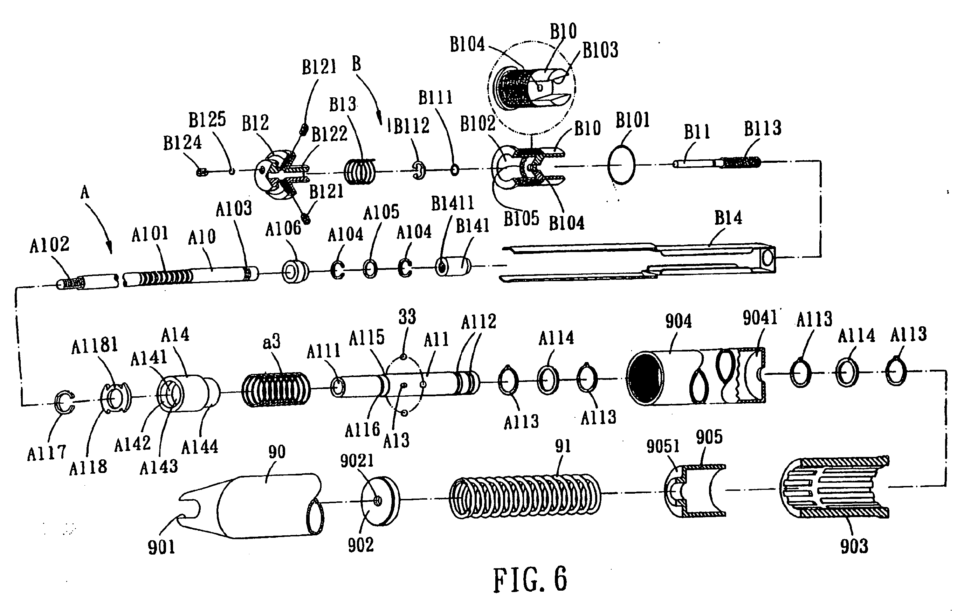

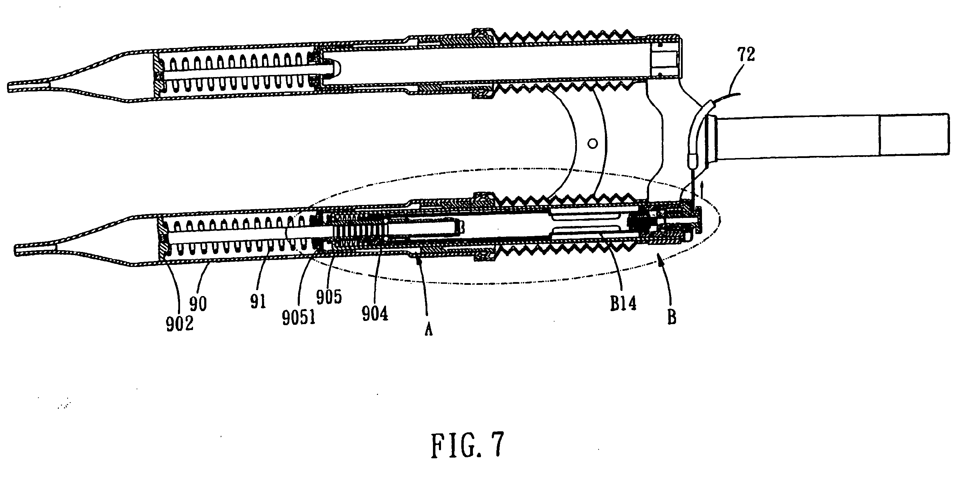

Referring to Figs. 6-9, a bike shock absorber (which is mounted on the front fork of a bike) in accordance with a second preferred embodiment of the present invention is shown and generally including: a basement 90, a clutch assembly A, a control assembly B, a shock-absorbing spring 91.

The basement 90, a gap 901 formed at a lower end of which is used to coupled to the front wheel axle of a bike. To a bottom of an inner space of the basement 90 is fixed a base board 902 that is formed at the center thereof with a threaded hole 9021. A mid sleeve 903 is disposed adjacent to the top end of the inner space of the basement 90 and interiorly equipped with a receiving tube 904. An upper end of the receiving tube 904 is fixed to the front fork of the bike, while a lower end of the receiving tube 904 is provided with a slide bush 905. Through the cooperation between the mid sleeve 903 and the slide bush 90, the receiving tube 904 is allowed to freely slide in the basement 90. The receiving tube 904 is provided at an end thereof corresponding to the baseboard 902 with a bottom 9041.

The clutch assembly A includes a positioning member A10, an axial tube A11, a clutch member 33 and a control element A14.

A first end of the positioning member A10 is provided with threads A102 and screwed in the threaded hole 9021 of the baseboard 902 of the basement 90, and a second end of the positioning member A10 is formed with locking groove A103. Via several positioning retainers A104, washers A105 and a buffer cushion A106, the positioning member A10 is used to position the receiving tube 904 in the basement 90. In addition, the positioning member A10 is provided at the outer periphery thereof with plural positioning grooves A101.

The axial tube A11 is interiorly formed with a through hole A111 for slidably receiving the positioning member A10. Plural positioning holes A13 are formed on the periphery of the axial tube A11. The positioning holes A13 correspond to the positioning grooves A 101 of the positioning member A10. A first end of the axial tube A11 is formed with plural retaining grooves A112 that are to be fixed to the bottom 9041 of the receiving tube 904 of basement 90 via plural retaining rings A11 and washers A114. A second end of the axial tube A11 corresponding to buffer cushion A106 is formed with a step periphery A115 and a retaining groove A116 respectively. The retaining groove A116, via a retaining ring A117, serves to fix a limit piece A118 beside the step periphery A115. The outer periphery of the limit piece A118 is provided with gaps A1181.

The clutch member 33 is slidably received in the positioning hole A 13 of the axial tube A11.

The control element A14 is slidably mounted on the exterior periphery of the axial tube A11 and interiorly provided with an annular cone-shaped step portion A141. The annular cone-shaped step portion A141 divides the inner space of the control member A14 into a big diameter portion A142 and a small diameter portion A143. The annular cone-shaped step portion A141 corresponds to the positioning holes A13 of the axial tube A11. At a position of the outer periphery of the control element A14 corresponding to the bottom 9041 of the receiving tube 904 is provided with a step periphery A144

The control assembly B includes a base body B10, a control shaft B11, a rotary knob B12, a back-moving spring B 13, an abutting member B 14 and a control spring a3.

The base body B10 is screwed on an upper end of the receiving tube 904 of the basement 90 via a seal ring B101. A first end of the base body B10 is formed with an inner hole B102, while a second end the base body B10 is formed with a slot B103, and a through hole B104 is located between the inner hole B102 and the slot B103. Furthermore, plural holes B105 are formed adjacent to the through hole B104 for insertion of the spring.

A first end of the control shaft B11 is inserted in the through hole B104 of the base body B10 via a seal ring B111, and the control shaft B11 is retained in the base body B10 by a retaining member B112. A second end of the control shaft B11 is provided with driving threads B113.

The rotary knob B12 is able to rotate after being pulled by the steel cord 72 (the steel cord is controlled by user) and fixed to the control shaft B11 via positioning screws B121. A hole B123 is formed on bottom of the outer periphery B122 at a first end of the rotary knob B12 for insertion of spring. A second end of the rotary knob B12 is used to fix the steel cord 72 via screws B124 and positioning cushions B125. The rotary knob B12 is rotatable on the base body B10.

The back-moving spring B13 serves to produce a rotating elastic force in a predetermined direction and to be mounted on the outer periphery B122 of the rotary knob B12. A first end of the back-moving spring B13 is inserted in the holes B105 of the base body B10 (can be inserted in any hole B105 according to the needs of the user so as to get different elastic force). A second end of the back-moving spring B13 is inserted in the hole B123 of the rotary knob B12.

The abutting member B14, a first end of which is fixed with an axial bush B141, the axial bush B 141 is interiorly formed with driving threads B 1411 that are meshed with the driving threads B 113 at the end of the control shaft for purpose of motion-transmitting. In this case, the first end of the abutting member B14 can be interactively connected to the control shaft B11 via the axial bush B14 (the abutting member B 14 can transmit motion to the control shaft B11, and vice versa). The second end of the abutting member B14 is inserted in the gaps A1181 of the limit piece A118 at the end of the axial tube A11 and abuts against the end surface of the control element A14 of the clutch assembly A.

The control spring a3 is mounted on the outer periphery of the axial tube A11 of the clutch assembly A and biased between the step periphery A144 of the control member A14 and the bottom 9041 of the receiving tube 904 of the basement 90.

The shock-absorbing spring 91 is biased between the baseboard 902 of the basement 90 and the step periphery 9051 of the slide bush 905 at the lower end of the receiving tube 904.

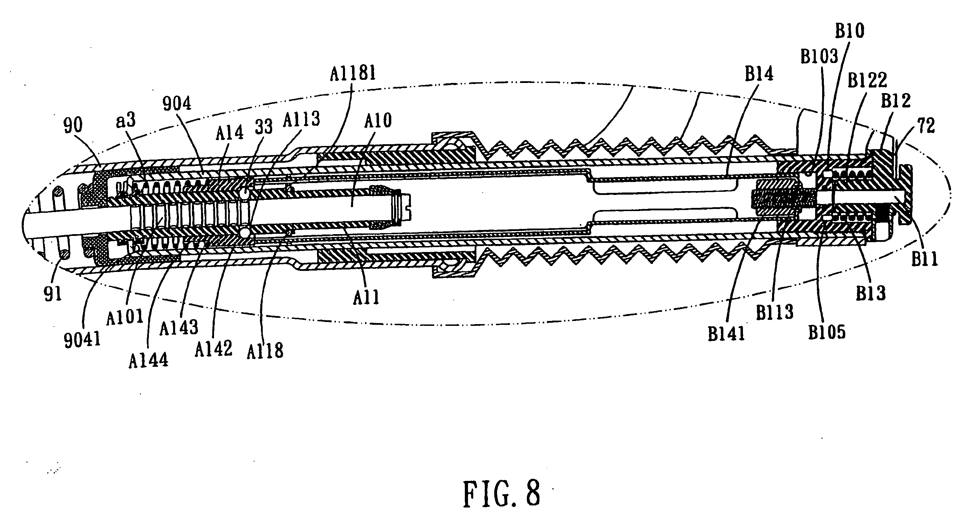

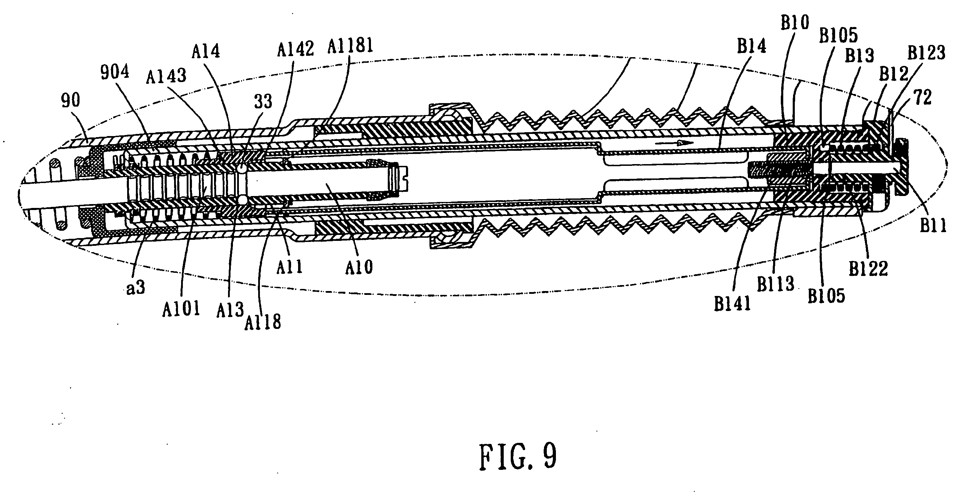

Referring particularly to Figs. 8 and 9, which show the operation manner and the function of the shock absorber in accordance with the second preferred embodiment of the present invention.

As shown in Fig. 8, when want to disable the shock absorbing function of the shock absorber, the user can pull a length of steel cord 72 and fix it (the method of pulling and fixing the steel cord 72 belongs to conventional technology) so as to cause a rotation of the rotary knob B12, synchronously to drive the control shaft B11 to rotate and further to compress the back-moving spring B13. During rotation, the driving threads B113 at the end of the control shaft B11 will move the abutting member B 14 (since the driving threads B1411 of the axial bush B141 at the first end of the abutting member 14 is interactively connected to the driving threads B113 at the end of the control shaft, and the abutting member B14 is unrotatable due to its outer periphery is confined by the slot B103 at the end of the base body B10, furthermore, the second end of the abutting member B14 abuts against the end surface of the control element A14 after passing through the gap A1181 of the limit piece A118). At this moment, the abutting member B14 moves the control element A14 and synchronously compresses the control spring a3, so as to enable the clutch member 33 to slide from the small diameter portion A143 of the annular cone-shaped step portion A141 of the control element A14 into the big diameter portion A142. Thus, the clutch member 33 slides out of the positioning grooves A101 of the positioning member A10. As a result, the positioning member A10 and the axial tube A11 can move relative to each other. At this moment, the basement 90, the receiving tube 904 and the shock-absorbing spring 91 are able to produce a buffering effect.

As shown in Fig. 9, when riding up a slop, and want to disable the shock absorbing function of the shock absorber for safe purpose (to prevent the tilt angle being increased by the motion of the shock absorber and causing the bike fall over), the user can push and release a length of the steel cord 72. The rotary knob B12 and the steel cord 72 are pushed by the back-moving spring B13 and rotate to their original position. The control shaft B11 is driven to rotate in opposite direction. The threads on the control shaft will drive the abutting member B14 to move, so as to form a space between the end of the abutting member B 14 and the end surface of the control element A14. Meanwhile, the control spring a3 pushes the control element A14 to move. The small diameter portion A143 of the annular cone-shaped step portion A141 inside the control element A14 will push the clutch member 33 to move from the positioning hole A13 of the axial tube A11 and make it engage in one of the plural positioning grooves A101 of the positioning member A10. At this moment, the positioning member A10 is locked with the axial tube A11, and the basement 90 and the receiving tube 904 are unable to move relative to each other. Thus, the shock absorbing function is disabled.

The shock absorber still will move up and down if the positioning groove A101 of the positioning member A10 is not meshed with the clutch member 33. During an instant period of motion of the shock absorber, when the clutch member 33 is in alignment with one of the positioning grooves A101, the control spring a3 will instantly move the control element A14, and the small diameter portion A143 of the annular cone-shaped step portion A141 of the control element A10 pushes the clutch member 33 to move into the positioning groove A101 of the positioning member A10. Since the positioning member A10 is provided with plural positioning grooves A101, in real operation, the clutch member 33 can be pushed by the control spring a3 and engages into one of the positioning grooves A101 of the positioning member A10. That is to say that the shock absorbing function of the shock absorber can be enabled/disabled according to needs.

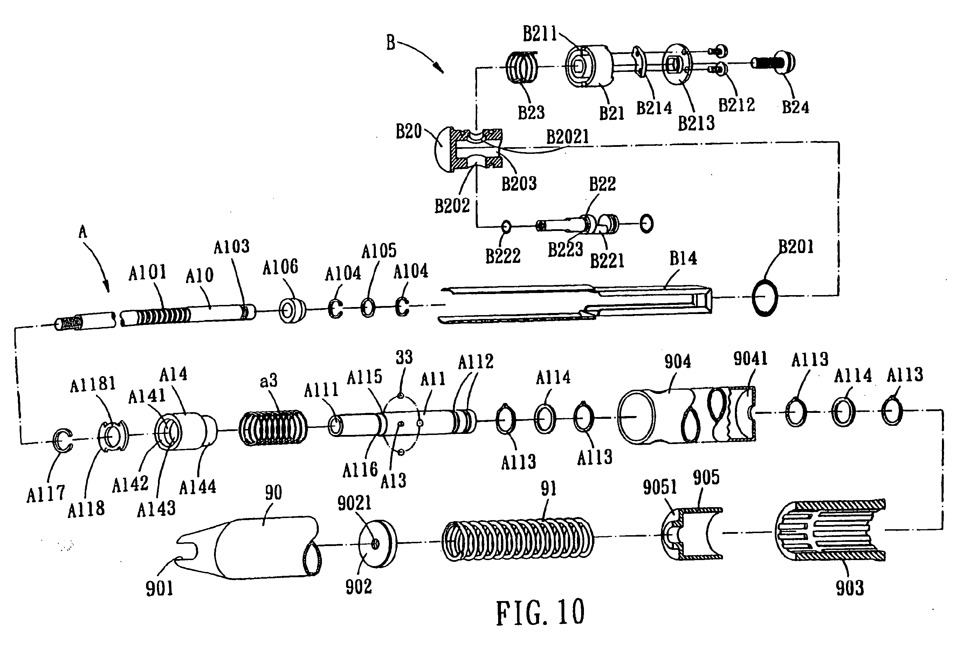

Referring to Figs. 10-14, a bike shock absorber in accordance with a third preferred embodiment of the present invention is shown and generally including: a basement 90 having a base board 902, a clutch assembly A, a control assembly B, a shock-absorbing spring 91. The control assembly B in this embodiment is differently designed as compared to that of the second embodiment, which uses another technique to operate the steel cord 72 and the control shaft B22. The different structure is to be explained in the following descriptions:

The control assembly B includes a basement B20, a control shaft B22, a rotary knob B21, a back-moving spring B23, an abutting member B 14 and a control spring a3.

The basement B20 is disposed at the top end of the receiving tube 904 via a seal ring B201 (the rest unmarked components are identical with that of the second embodiment). The basement B20 is interiorly formed with a square space B203 for reception of the abutting member B14. The abutting member B14 is slidably but non-rotatably disposed in the square space B203, and a control hole B202 perpendicularly passes through the square space B203. The control hole B202 is formed with an inner flange B2021.

The control shaft B22 is moveably inserted in the control hole B202 via two seal rings B222. A first end of the control shaft B22 is provided with an eccentric abutting portion B221, and a step periphery B223 is formed adjacent to the mid of the control shaft B22 and positioned to the inner flange B2021 of the control hole B202 of the basement B20.

The rotary knob B21 is fixed to an end of the control shaft B22 via a screw B24. A cover B213 and a positioning block B214 are fixed to the end surface of the rotary knob B21 via screw B212. The rotary knob B21 uses the positioning block B214 to position an end of the steel cord 72. The steel cord 72 is controlled by the user.

The back-moving spring B23 is a tension spring received in an annular groove B211 of the rotary knob B2, both ends of the back-moving B23 are respectively fixed to the rotary knob B21 and the basement B20 (the back-moving spring B23 serves to produce torsion force in a predetermined direction).

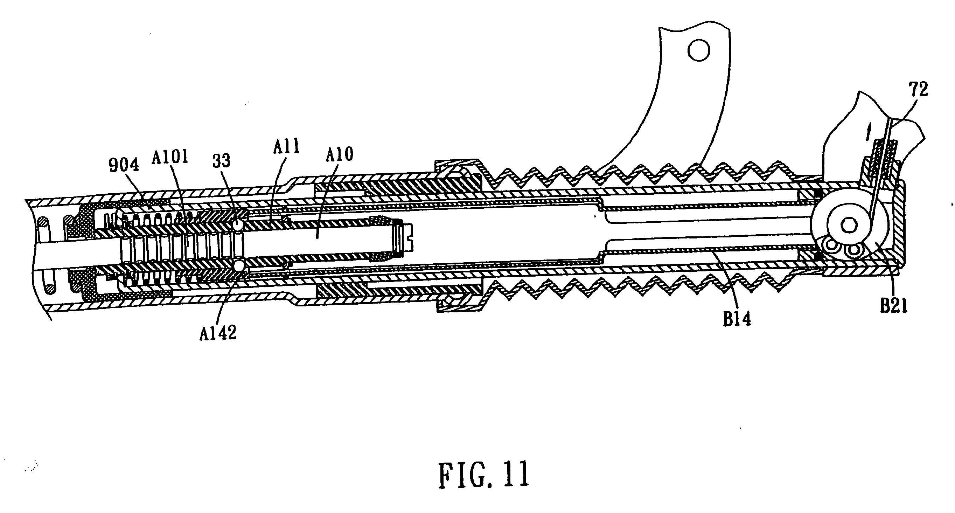

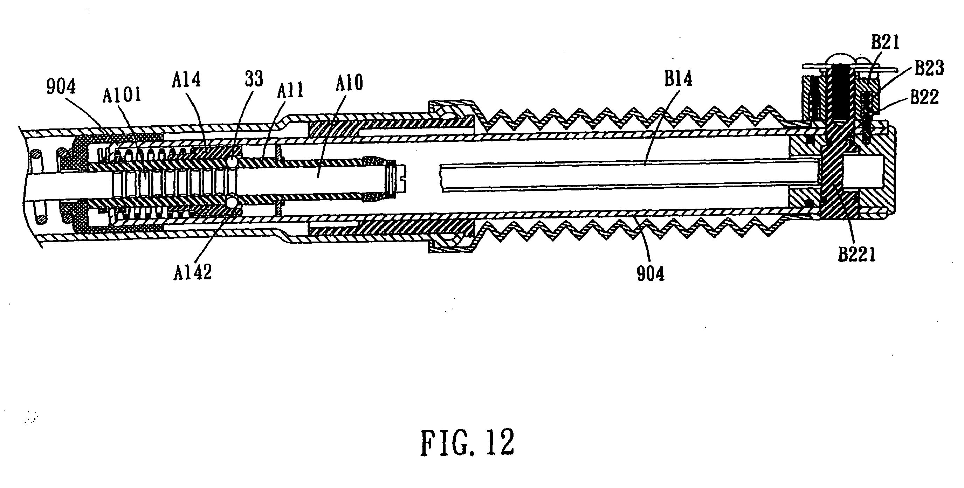

Referring particularly to Figs. 11 and 12, which show operation manner and function of the shock absorber in accordance with the third preferred embodiment of the present invention (specially aiming at the different structure).

As shown in Figs. 11 and 12, when the user pulls a length of the steel cord 72 and fixes it (the shock-absorbing function is disabled), the rotary knob B21 will rotate the control shaft B22. Then the eccentric abutting portion B221 of the control shaft B22 moves towards the baseboard 902. At this moment, the front end of the abutting member B 14 is abutted by the eccentric abutting portion B221, so it will push the control member A14 to move toward the baseboard 902. As a result, the clutch member 33 moves close to the big diameter portion A142 of the control member A14, while the clutch member 33 slides out of the positioning groove A101 of the positioning member A10. Through this way, the positioning member A10 is able to move relative to the axial tube a11 (the receiving tube 904 is able to freely move downward after being affect by force). Thus, the shock-absorbing function is disabled.

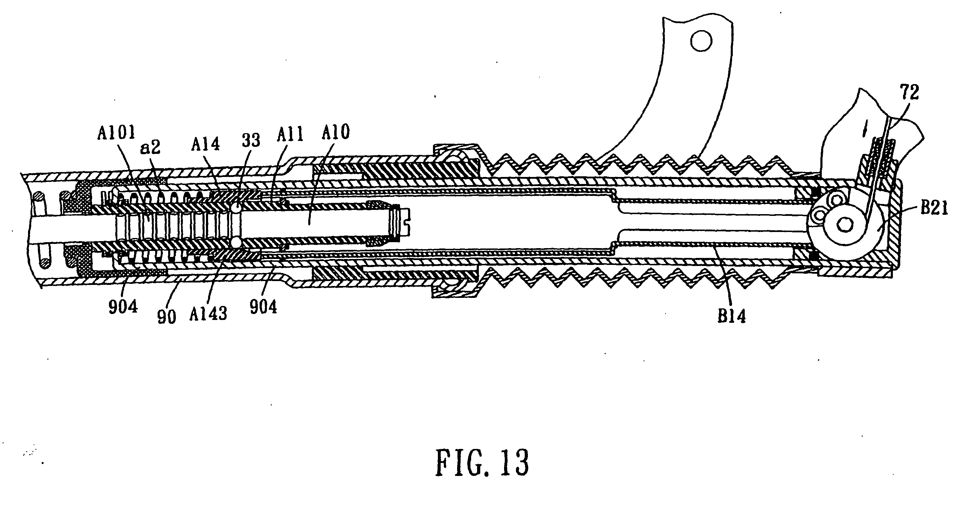

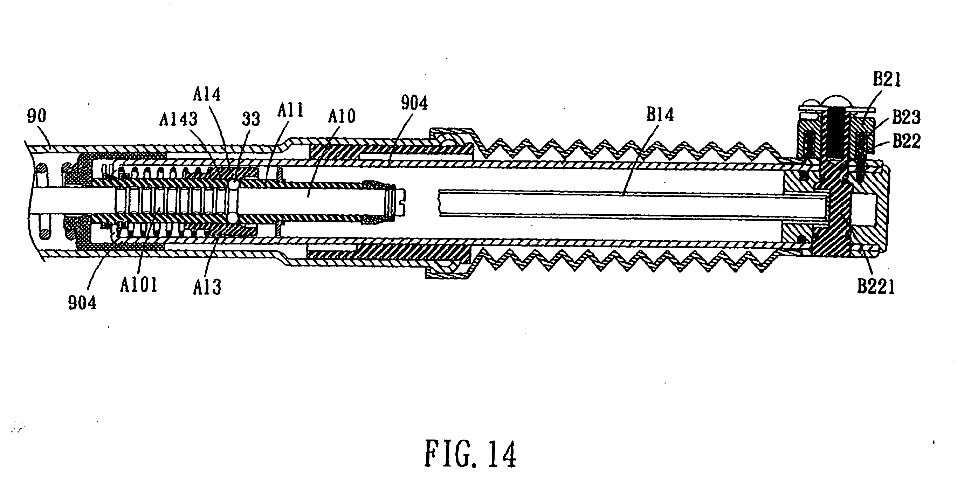

As shown in Figs. 13 and 14, when the user pushes and releases a length of the steel cord 72 (the shock-absorbing function is disabled), the back-moving spring B23 rotates and then positions the rotary knob B21. The control shaft B22 is synchronously driven to rotate by the rotary knob B21, such that the eccentric abutting portion B221 rotates in a direction away from the baseboard 902 and disengages from the end of abutting member B14. At this moment, a space is formed between the abutting member B 14 and the control member A 14 and makes the control spring a3 move the control member A14 with its restoring force. And then the small diameter portion A143 of the annular cone-shaped step portion A 141 inside the control member A 14 pushes the clutch member 33 to move from the positioning hole A13 of the axial tube A11 and engage in one of the plural positioning grooves A 101 of the positioning member A10. At this moment, the positioning member A10 is locked with the axial tube A11. Accordingly the basement 90 is unable to move relative to the receiving tube 904, and the shock-absorbing function is achieved. The above-mentioned application of the third preferred embodiment is achieved only by improving the structure of the control assembly B, the disclosed technical characteristics are identical to that of the second embodiment and may be made without departing from the scope of the present invention.

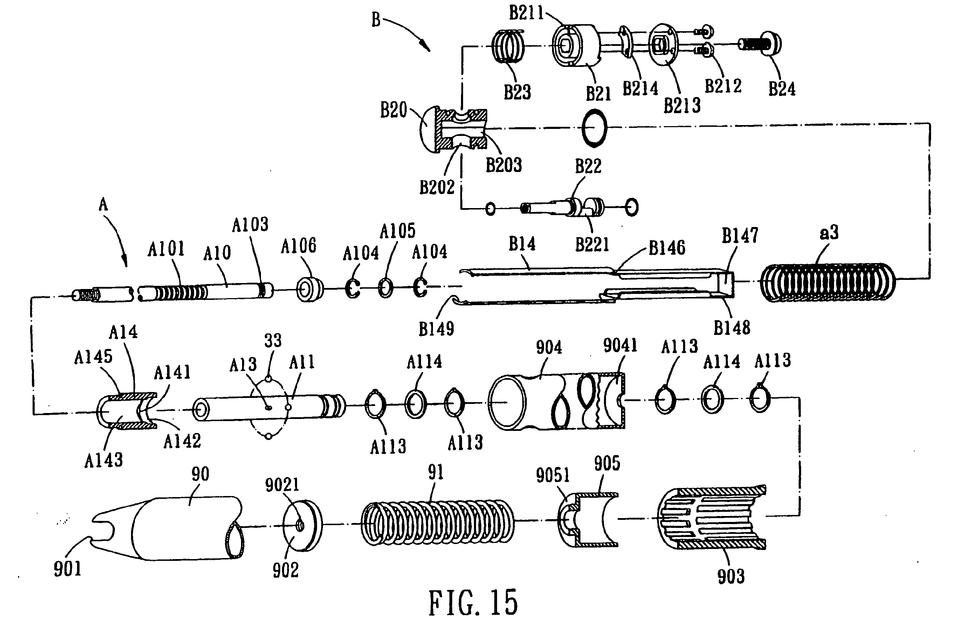

Referring to Figs. 15-17, a shock absorber for a bicycle in accordance with a fourth embodiment of the present invention and generally including a basement 90 having a base board 902, a clutch assembly A, a control assembly B, a shock-absorbing spring 91. The fourth preferred embodiment also has the same shock-absorbing function by changing the structural design of the abutting member B14, the control member A 14 and the control spring a3 of the third embodiment, and the different structures are to be explained as follows:

The control member A14 is also mounted on the exterior periphery of the axial tube A11. However, the annular cone-shaped step portion A141, the big diameter portion A142 and the small diameter portion A143 of the control member A14 tilt the direction of the third embodiment. An end of the control member A14 is provided with groove A145. The abutting member B14 is formed with an abutting portion B146 at a position close to the mid portion thereof corresponding to the control assembly B. The control spring a3 is changed to abut against the portion between the abutting portion B146 of the abutting member B14 and the control assembly B. Furthermore, the front end of the abutting member B14 is provided with an actuating groove B147 for reception of the eccentric abutting portion B221 of the control shaft B22. And the portion B148 outside the actuating groove B147 of the abutting member B14 is moveably but non-rotatablly received in the square space B203 of the basement B20. The rear end of the abutting member B14 is provided with a locking protrusion B 149 that is to be engaged in the groove A 145 of the control member A14.

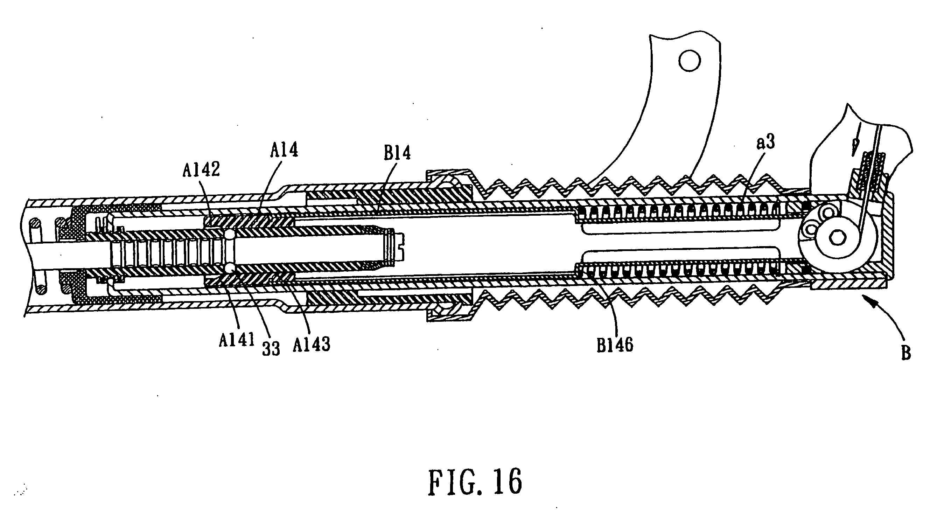

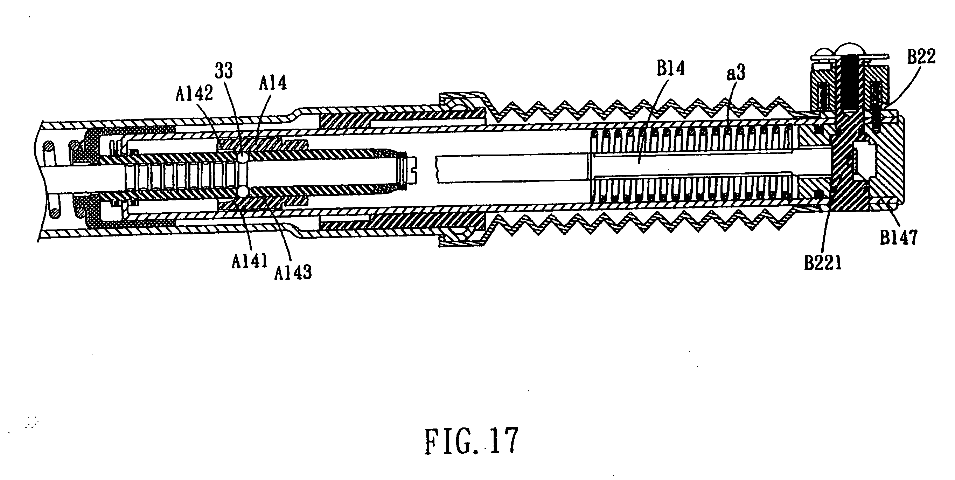

Referring to Figs. 16 and 17, in which, the annular cone-shaped step portion A141, the big diameter portion A142 and the small diameter portion A143 are used to change the operational direction of the control element A14. The control spring a3 also can provide an elastic force having the same effect of the control spring a3 of the second embodiment when it is abutting against the portion between the abutting portion B146 of the abutting member B14 and the control assembly B. Thereby, the operational effect of the fourth embodiment is same as that of the third embodiment, the only difference is that the operation direction of the control spring a3 and the control member A14 is obviously changed.

On the other hand, the fourth embodiment provides another type operational manner via the cooperation of the actuating groove B 147 and the eccentric abutting portion B221. And the actuating groove B147 is able to moveably abut against and position the eccentric abutting portion B221. Thereby, the actuating groove B147 will enable the abutting member B14 to be aligned with the relative position of the eccentric abutting portion B221, so as to produce the same effect as that of the afore-mentioned embodiments. The above-mentioned application of the fourth preferred embodiment is achieved by changing the structure of the abutting member, the control assembly and the control spring. However, the disclosed technical characteristics are identical to that of the other respective embodiments and may be made without departing from the scope of the present invention.

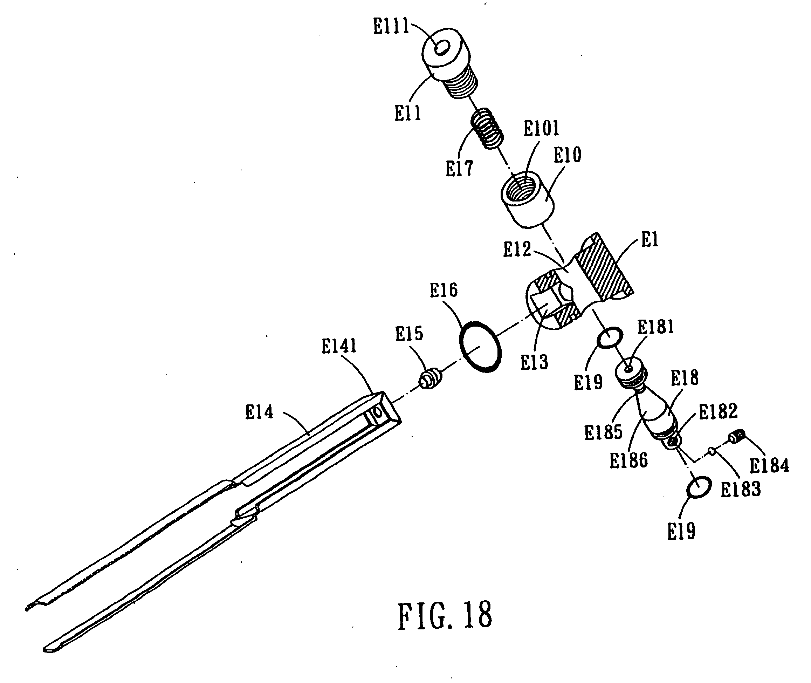

Referring to Figs. 18-20, a shock absorber for a bicycle in accordance with a fifth embodiment of the present invention is shown, which is the combination of the control assembly B of the first embodiment and the components of the second embodiment, generally including a basement 90 having a base board 902, a clutch assembly A, a control assembly B and a shock-absorbing spring 91. The fifth preferred embodiment also has the same shock-absorbing function by assembling the control assembly B of the first embodiment to the receiving tube 904 of the basement 90 of the second embodiment, and the different structures are to be explained as follows:

The abutting member E14 in the receiving tube 904 is provided at the utmost front end E141 with an arc shaft E15.

The base body E1 is fixed to the top end of the receiving tube 904 via a seal ring E16. A first end of the base body E1 is formed with a square space E13 for reception of the end E141 of the abutting member E14. The abutting member E14 is moveably but non-rotatablly disposed in the square space E13. The base body E1 is additionally provided with a control hole E12, a positioning bush E10 is fixed close to the control hole E12, and the control hole E12 passes through a side of the square space E13. The positioning bush E10 is interiorly formed with threaded hole E101, a back-moving spring E17 is confined in the control hole E12 by a positioning cover E11, and an end of the back-moving spring E17 abuts against the positioning cover E11.

The control shaft E 18 inserts in the control hole E12 of the base body E1, an end of the control shaft E18 abuts against another end of the back-moving spring E17. A pair of seal rings E19 are respectively provided at both ends of the control shaft E18 so as to achieve a waterproof effect. A steel cord 72 inserts in the axial hole E181 of the control shaft E18 and then passes outward through the hole E 111 of the positioning cover E11 (the steel cord is controlled by user). The control shaft E18 is further formed with a threaded hole E182 which is perpendicular to the axial hole E181 so as to fix the steel cord 72 via a cushion E183 and a screw E184. The control shaft E18 is annularly provided at the outer periphery thereof with a groove E185 and an annular cone-shaped surface E 186 that correspond to the arc shaft E15 at the end of the abutting member E14.

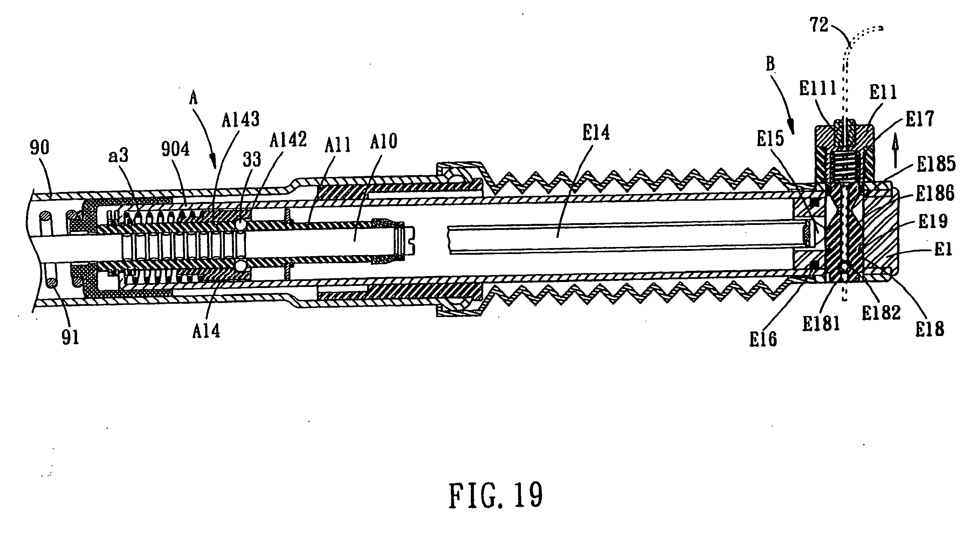

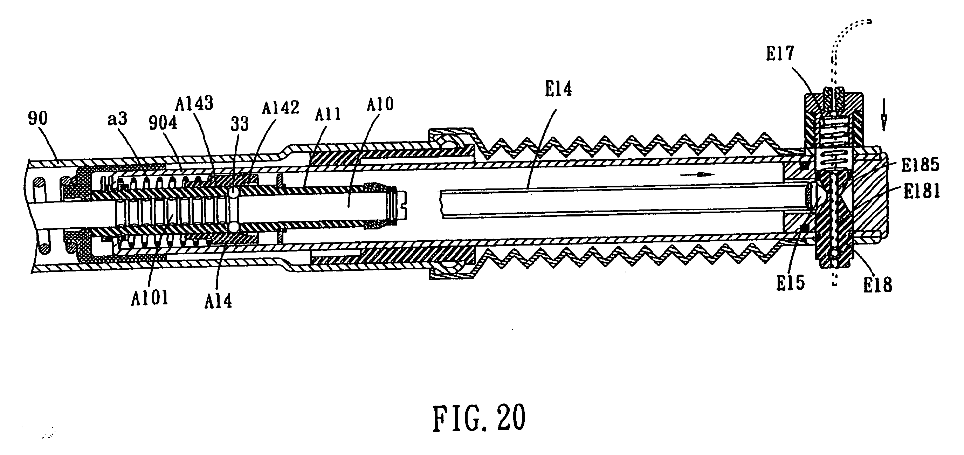

Referring to Figs. 19 and 20, the steel cord 72 cooperates with the back-moving spring E17 to control the movement of the control shaft E18. The position of the control shaft E18 determines the state of the abutting member E14 that the abutting member E14 either abuts against the big diameter portion of the annular cone-shaped surface E186 or slides into the groove E185.

If the arc shaft E15 of the abutting member E14 abuts against the big diameter portion of the annular cone-shaped surface E186 of the control shaft E18, the abutting member E14 in the receiving tube 904 will be pushed move the control element A14. Meanwhile, the control element A14 will make the clutch member 33 move toward the big diameter portion A142 of the control element A14, such that the positioning member A10 and the axial tube A11 are moveable relative to each other, and so are the basement 90 and the receiving tube 904. Thus, the function of shock absorbing is enabled.

If the control shaft E18 is moved by the back-moving spring E17 when the user pushes and releases a length of the steel cord, and the arc shaft E15 of the abutting member E1 engages in the groove E185, the control spring a3 will push the control element A14 to move. Meanwhile, the small diameter portion A143 of the control element A14 pushes the clutch member 33 into the positioning groove A101of the positioning member A10. Through this way, the positioning member A10 is locked with the axial tube A11, so as to disable the shock-absorbing function. The disclosed technical characteristics of this embodiment are identical to that of the other respective embodiments and may be made without departing from the scope of the present invention.

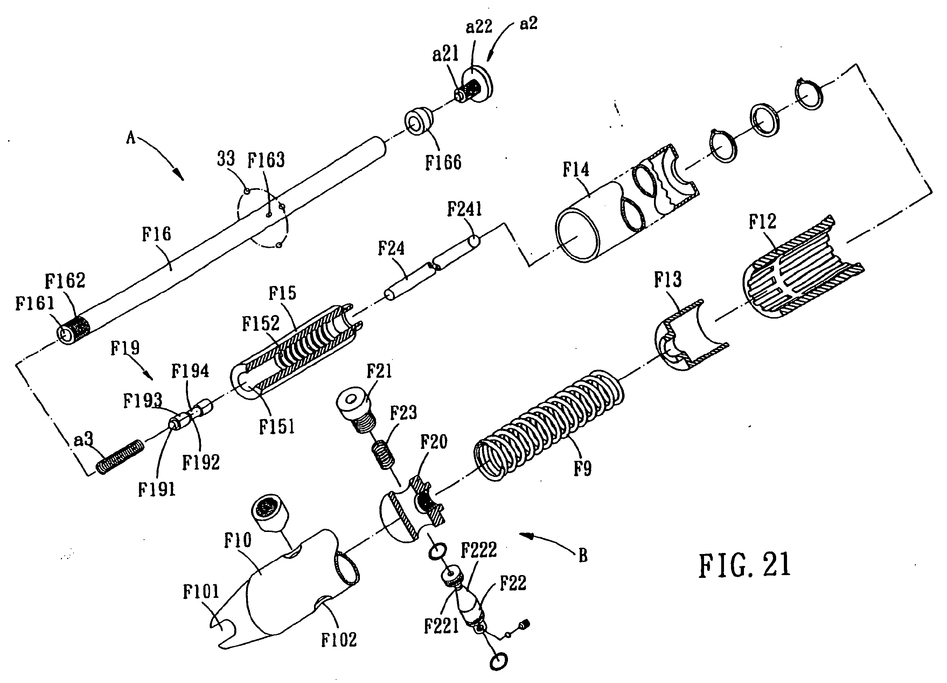

Referring to Figs. 21-23, a shock absorber for a bicycle in accordance with a sixth preferred embodiment of the present invention is shown and generally including: a basement F 10, a clutch assembly A, a control assembly B and a shock-absorbing spring F9.

The basement F10, inside of which is received with a mid sleeve F12 and a slide bush F13 for reception of a receiving tube F14. The top end of the receiving tube F14 is fixed to the front fork of a bike. The slide bush F13 and the receiving tube F14 will move relative to the basement F10 when the bike is being affected by force. A through hole F102 is formed adjacent to the bottom of the basement F10, and a gap F101 at the lower end of the basement F10 is used to engage the wheel axle.

The clutch assembly A includes a positioning member F15, an axial tube F16, a clutch member 33, a control element F19.

The positioning member F15 is disposed in the receiving tube F14 of the basement F10, which is interiorly formed with a through hole F151, and plural positioning grooves F152 are formed on the inner wall of the positioning member F15.

The axial tube F16 is inserted in the through hole F151 of the positioning member F15 and interiorly formed with a through hole F161. A first end of the axial tube F16 is provided with outer threads F162. At a position corresponding to the positioning grooves F152 of the positioning member F15, the axial tube F16 is provided with a positioning hole F163. A second end of the axial tube F16 is formed with inner threads F164.

The clutch member 33 corresponds to the positioning grooves F152 of the positioning member F15 and to be received in the positioning hoe F163 of the axial tube F16.

The control element F 19 is moveably inserted in the through hole F161 of the axial tube F16. On surface of a first end of the control element F19 is formed with a protrusion F191, and an annular cone-shaped step portion F 192 is formed on the outer periphery of the control element F19 and serves to divide the control element F19 into a big diameter portion F193 and a small diameter portion F194.

The control assembly B is disposed in the through hole F102 at the bottom of the basement F 10 and including: a base body F20, a positioning cover F21, a control shaft F22, a back-moving spring F23, an abutting member F24, a seal cover a2 and a control spring a3. The structure of the control shaft F22 is identical to that in the fifth embodiment. The steel cord 72 is controlled to move the control shaft F22, and the control shaft F22 also has a groove F221 and an annular cone-shaped surface F222 correspond to the arc surface F241 of the abutting member F24. The structure of the seal cover a2 is the same as that of the first embodiment, which is received in the through hole F161 of the axial tube F16 of the clutch assembly A and screwed with the inner threads F164 of the axial tube F16. A buffer cushion F 166 is mounted to the annular periphery a22 of the seal cover a2. The detail structures would not be explained here.

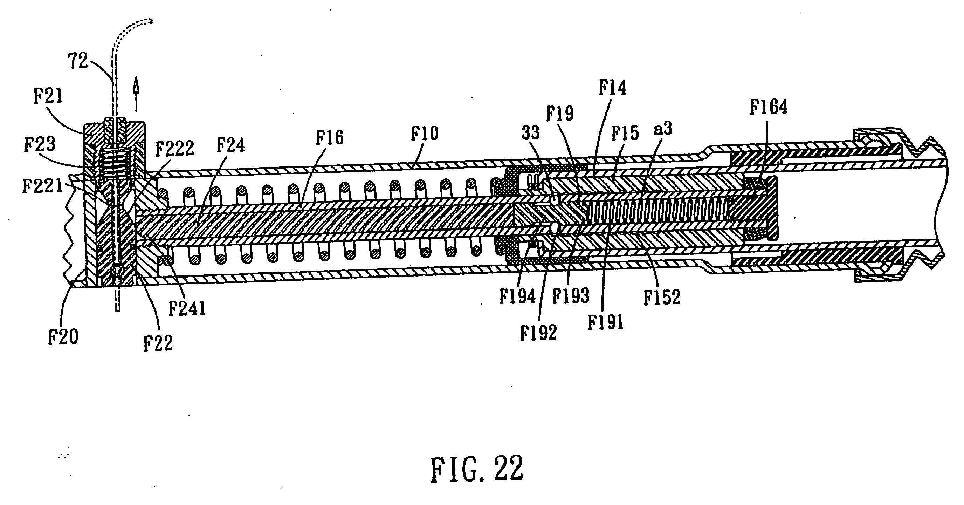

As shown in Fig.22, when the shock absorber is in use, the steel cord 72 is pulled by the user and drives the control shaft F22 to move, the movement of the control shaft F22 will make the abutting member F24 move to the big diameter portion of the annular cone-shaped surface F222. Meanwhile, the abutting member F24 is caused to move. The control element F19 is moved by the abutting member F24 (pushed by the elastic force of the control spring a3), so that the big diameter portion F193 of the annular cone-shaped step portion F192 of the control element F19 disengages from the clutch member 33 of the axial tube F16, and the clutch member 33 slides from the annular cone-shaped step portion F192 to the small diameter portion F194. In this case, the clutch member 33 will be disengaged from the positioning groove F152 of the positioning member F15. Thus, the axial tube F16 and the positioning member F15 are then able to move relative to each other, so as to absorb the shock of the bike.

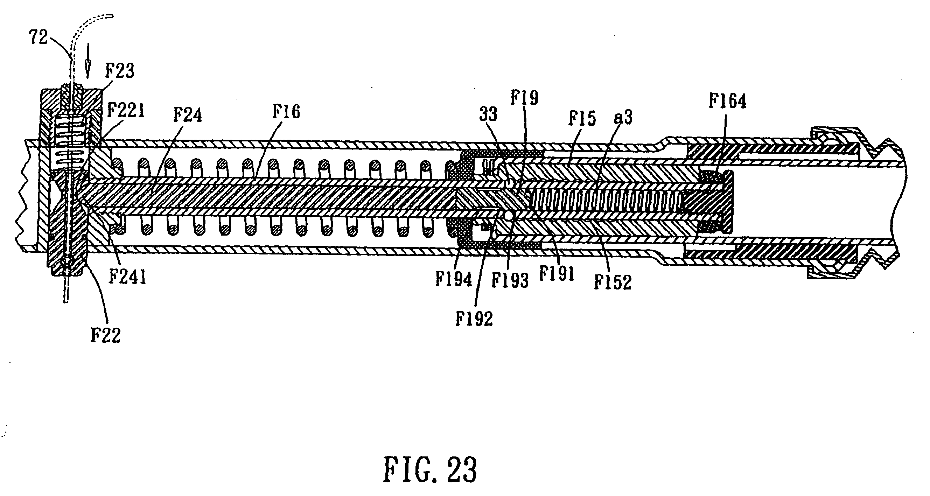

As shown in Fig. 23, when wants to disable the shock absorbing function, the user only needs to push and releases a length of the steel cord 72. Then the control shaft F22 will be pushed by the back-moving spring F23 and moves back to the original position. Meanwhile, the movement of the control shaft F22 makes the abutting member F24 slide into the groove F221, and forms a space between the control member F19 and the abutting member F24. Thus, the control spring a3 pushes the control member F19 to move. Meanwhile, the big diameter portion F193 of the annular cone-shaped step portion F192 of the control member F19 pushes the clutch member 33 into the positioning groove F152 of the positioning member F15, such that the axial tube F16 and the positioning member F15 are unable to move relative to each other. Thus, the shock absorbing function is disabled.

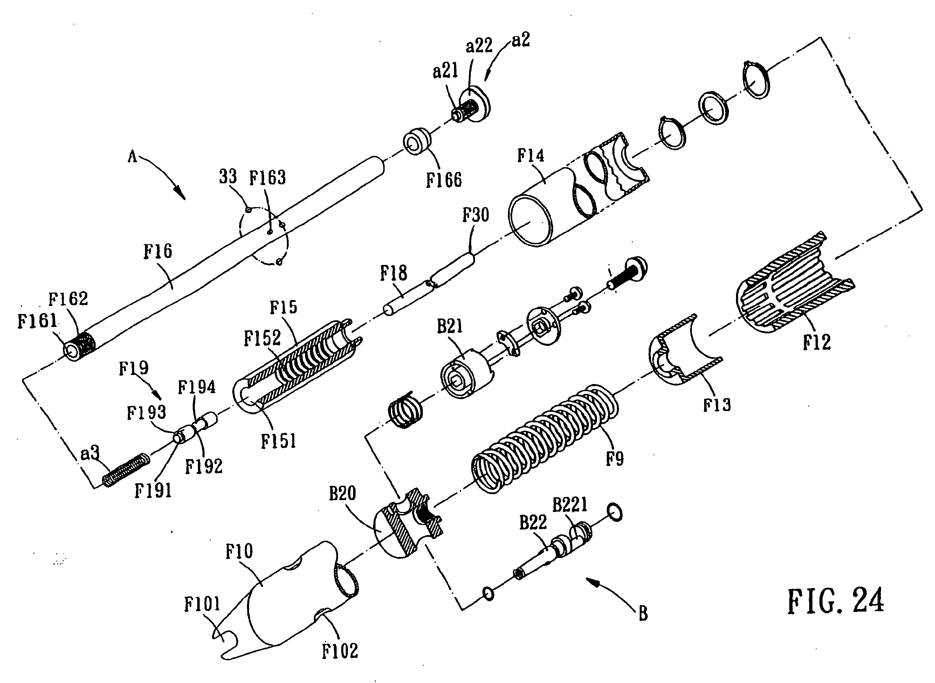

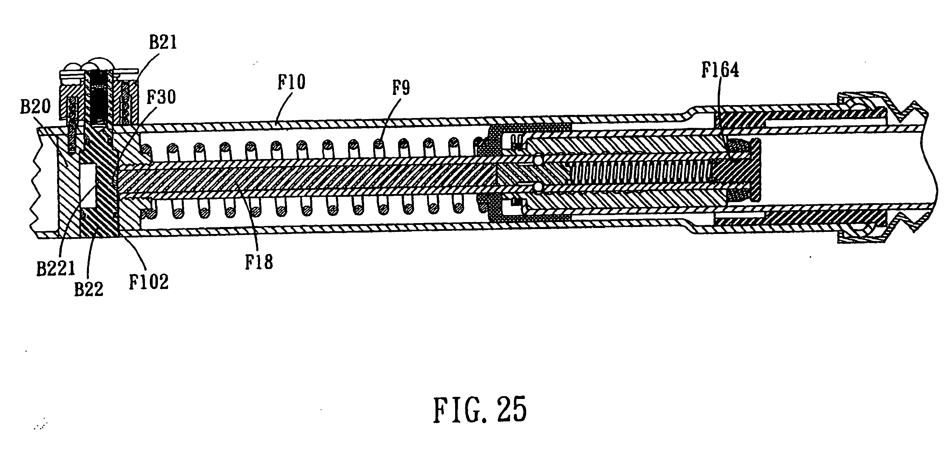

Referring to Figs. 24 and 25, a shock absorber for a bicycle in accordance with a seventh embodiment of the present invention is shown and which is the combination of the control assembly B of the third embodiment and the basement F10, the clutch assembly A and the shock-absorbing spring F9 of the sixth embodiment.

The base body B20, the rotary knob B21 and the control shaft B22 of the control assembly B are received in the through hole F102 of the basement F10 in a manner that the eccentric abutting portion B221 of the control shaft B22 abuts against the top flat surface F30 of the abutting member F18. The seventh preferred embodiment is the effective combination of the control assembly B of the third embodiment and the clutch assembly A of the sixth embodiment. The disclosed technical characteristics in this embodiment are identical to that of the other embodiments and may be made without departing from the scope of the present invention.

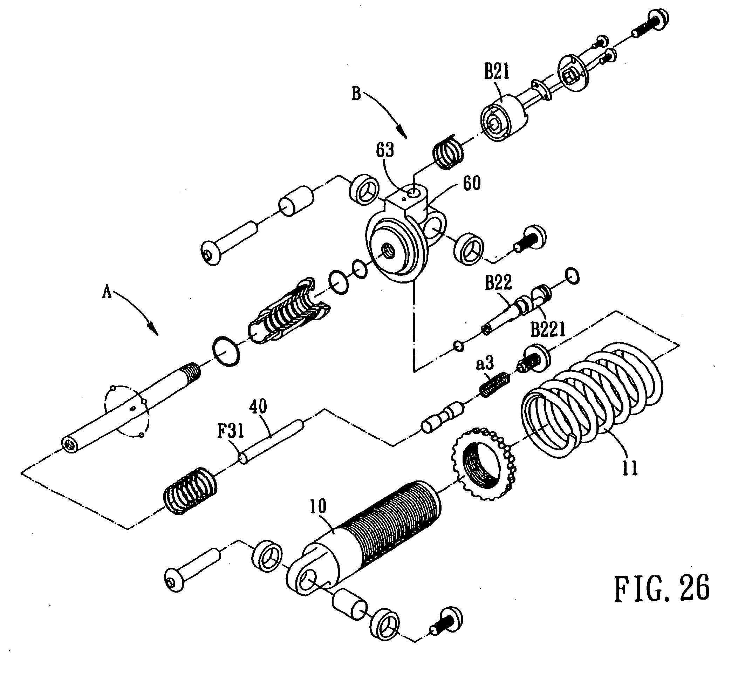

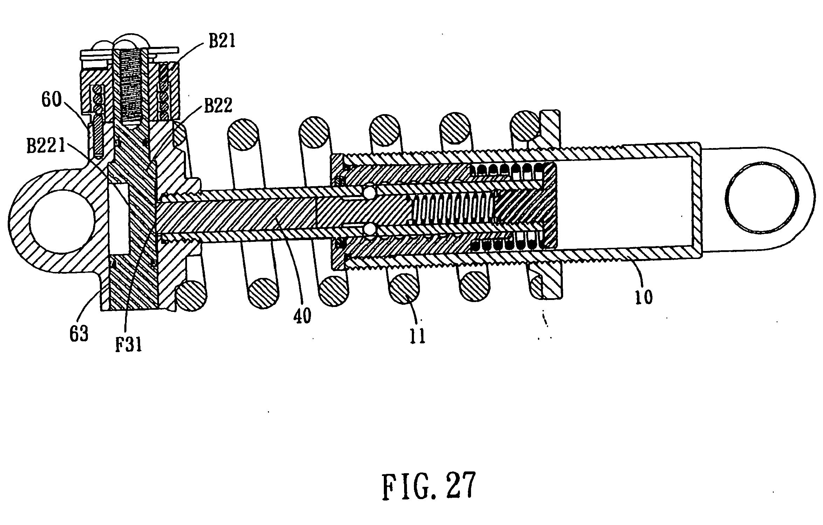

Referring to Figs. 26 and 27, a shock absorber for a bicycle in accordance with a eighth embodiment of the present invention is shown and which is the combination of the control assembly B of the third embodiment and the basement 10, the clutch assembly A and the shock-absorbing spring 11 of other embodiments.

The rotary knob B21 and the control shaft B22 of the control assembly B are received in the control hole 63 of the base body 60 (the base body B20 of the third embodiment is replaced with the base body 60 of other embodiments) in a manner that the eccentric abutting portion B221 of the control shaft B22 is abuts against the top flat surface F31 of the abutting member 40 (the top flat surface F31 substitutes for the arc surface 761). The disclosed technical characteristics in this embodiment are identical to that of the other embodiments and may be made without departing from the scope of the present invention.

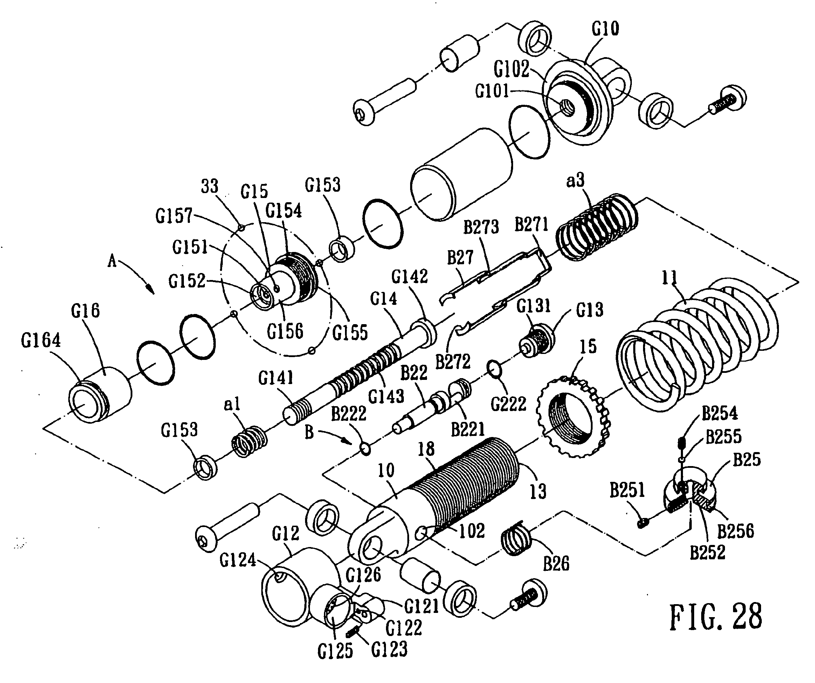

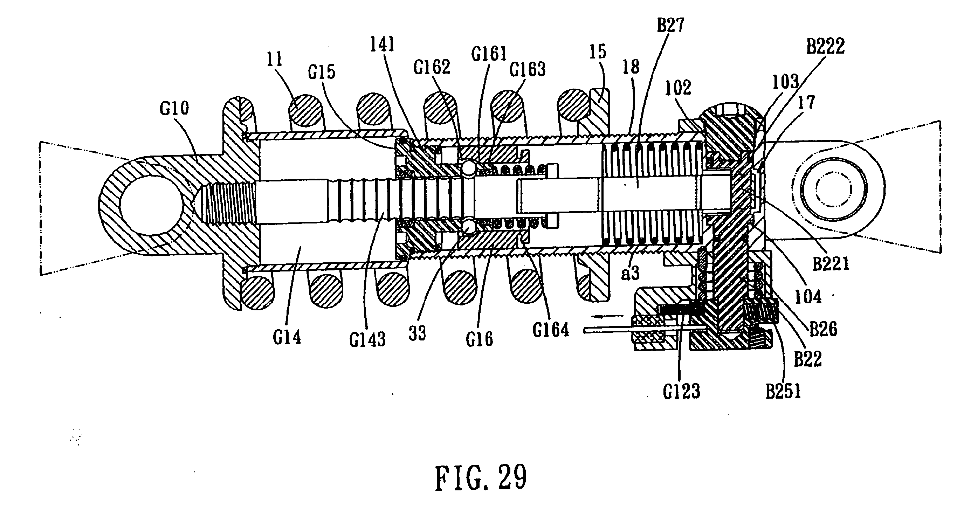

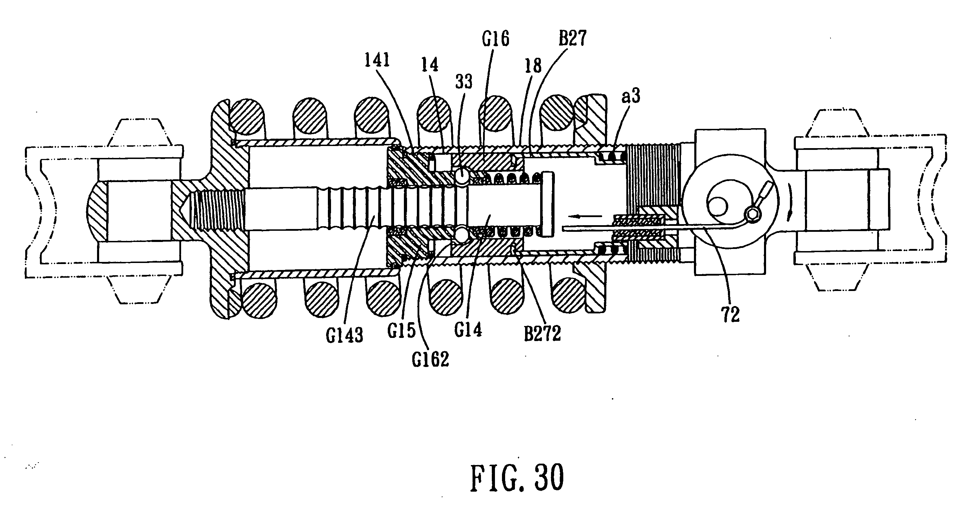

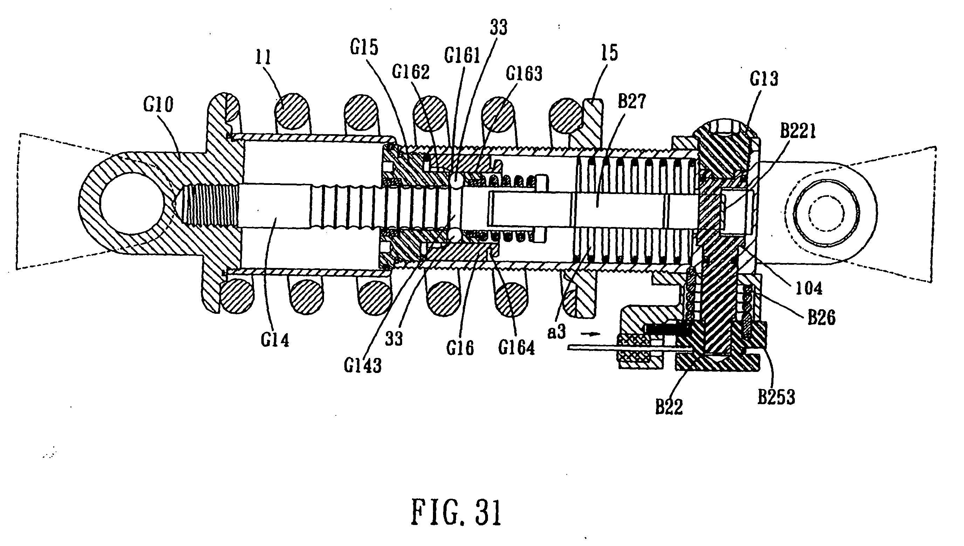

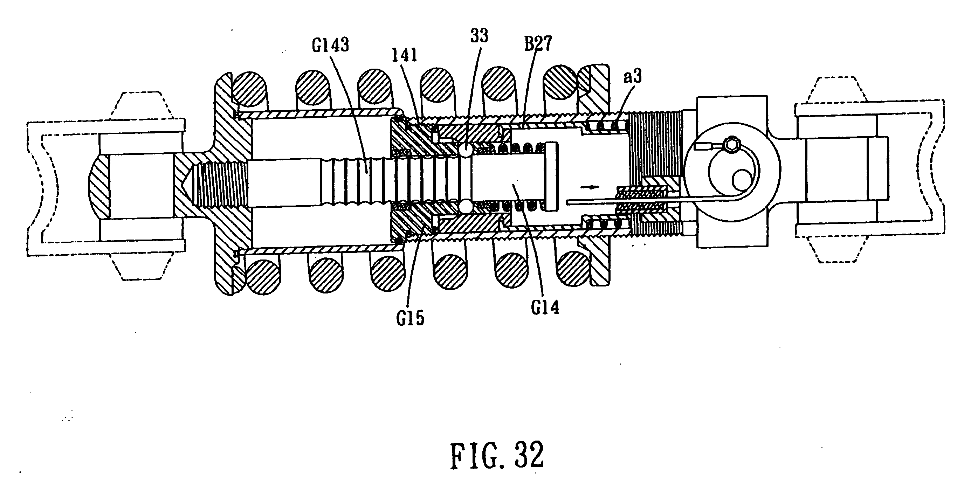

Referring to Figs. 28-32, a shock absorber for a bicycle in accordance with a ninth embodiment of the present invention is shown and which is the combination of the basement 10, the buffer spring a1 and the shock-absorbing spring 11 of other embodiments and the clutch assembly A and the control assembly B of the fourth embodiment. The control assembly B is disposed in the basement 10. Although the technical principle of the ninth embodiment is same as that of the afore-mentioned embodiments, the structure is a little different and to be explained as follows:

The shock absorber in this embodiment includes a basement 10 (interiorly equipped with control assembly), an upper basement G10, a clutch assembly A, a shock-absorbing spring 11 and a buffer spring a1.

The basement 10 includes an adjust ring 15, a steel-cord basement G12, a positioning cover G13, a control shaft B22, a rotary knob B25, a back-moving spring B26, an abutting member B27 and a control spring a3.

The basement 10, a first end of which is provided with a mouth 13 which is in communication with a space 14 formed inside the basement 10. On the inner wall of the space 14 adjacent to the mouth 13 is formed with inner threads 141. A square space 17 is formed close to the bottom 16, and outer threads 18 are formed on the outer periphery of the basement 10 and employed to mesh with the adjust ring 15. A second end of the basement 10 is fixed to the body of a bike, and a control hole 102 is formed on the periphery of the second end. A first end of the control hole 102 is provided with threads 103, while a second of which is formed with an inner flange 104.

The steel-cord basement G12 is interiorly formed with a space and mounted on the outer periphery of the basement 10. A first end of the steel-cord basement G12 is provided with a bearing seat G121 which is used to fix the steel cord 72, adjacent to the bearing seat G121 is formed a threaded hole G122 and in which is screwed with a screw G123. A receiving hole G124 is formed on the peripheral wall of the steel-cord seat G12, and on the peripheral wall opposite the receiving hole G124 is further formed a recess G125. The bottom of the recess G125 is formed with plural spring-insertion holes G126.

The positioning cover G13 has a first end formed with outer threads G 131 which are screwed with the inner threads 103 in the control hole 102 of the basement 10 after passing through the receiving hole G124 of the steel-cord basement G12.

The control shaft B22, after passing through the receiving hole G124 of the steel-cord basement G12, is received in the control hole 102 of the basement 10 via two seal rings B222. A first end of the control shaft B22 in positioned by the inner flange 104 in the control hole 102 of the basement 10. A second end of the control shaft B22 is positioned and screwed with the outer threads G131 of the positioning cover G13. The control shaft B22 is further provided with an eccentric abutting portion B221.

The rotary knob B25 is fixed to the outer periphery of the control shaft B22 by the screw B25. On the outer periphery B252 of a first end of the rotary knob B25 is formed with spring-insertion hole B253. A second end of the rotary knob B25 is used to fix the steel cord 72 via screw B254 and positioning cushion B255. On the outer periphery of the rotary knob B25 is formed with an arc groove B256 which is cooperated with the screw G123 in the threaded hole G122 of the steel-cord basement G12, so as to limit the rotating angle of the rotary knob B25.

The back-moving spring B26 serves to provide tension force in a predetermined direction and to be received in the receiving groove G125 of the steel-cord basement G12. A first end of the back-moving spring B26 is inserted in the spring-insertion hole G126 of the steel-cord basement G12, and a second end of which is inserted in the spring-insertion hole B253 of the rotary knob B25.

The abutting member B27, a first end of which is fixed in the squared space 17 of the basement 10 and unable to rotate cause restricted by the square space 17. The first end of the abutting member B27 is formed with an actuating groove B271 for reception of the eccentric abutting portion B221 of the control shaft B22. A second end of the abutting member B27 is provided with locking protrusion B272, and on the abutting member B27 adjacent to the mid portion is formed with an abutting portion B273.

The control spring a3 is biased between the abutting portion B273 of the abutting member B27 and the bottom of the space 14 of the basement 10.

The upper basement G10, a first end of which is coupled to the bike and a second of which is interiorly formed with inner threads G101. A flange G102 is formed the outer surface of the upper basement G10 for positioning a spring.

The clutch assembly A includes a positioning member G 14, an axial tube G15, a clutch member 33 and a control element G16.

The positioning member G14, a first end of which is provided with outer threads G141 which are to be meshed with the inner threads G101 of the upper basement G10, a second end of which is provided with an annular protrusion G142. Adjacent to the mid portion of the positioning member G14 is formed with plural positioning grooves G143.

The axial tube G15 is interiorly formed with a through hole G151 for insertion of the positioning member G14. Both ends of the through hole G151 are respectively formed with an expanding hole G152 for reception of a wearing slide bush G153. A first end of the axial tube G15 is provided with outer threads G154, and on the outer periphery of this end is formed with a flange G155, such that the axial tube G15 can be screwed with the inner threads 141 in the space 14 of the basement 10. A second end of the axial tube G15 is formed with step periphery G156, and on the peripheral surface of the step periphery G156 is formed with a positioning hole G157 that corresponds to the plural positioning grooves G143 of the positioning member G14.

The clutch member 33 is moveably disposed in the positioning hole G157 of the axial tube G15.

The control element G16 is moveably mounted on the outer periphery of the axial tube G15. An annular cone-shaped step portion G161 is formed in inner space of the control element G16, which divides the control element G16 into a big diameter portion G162 and a small diameter portion G163. An end of the control element G16 corresponding to the small diameter portion G163 is formed with a groove G164 for engaging with the locking protrusion B272 of the abutting member B27.

The shock-absorbing spring 11, a first end of which abuts against the adjust ring 15 of the basement 10, and a second end of which abuts against the flange G 102 on the basement G10.

The buffer spring a1 is biased between the annular protrusion G 142 of the positioning member G 14 and the step periphery G 156 of the axial tube G15.

When the user enables the shock-absorbing function by pulling a length of the steel cord 72, the eccentric abutting portion B221 of the control shaft B22 is moved by the steel cord 72. Meanwhile, the front end of the abutting member B27 is moved by the eccentric abutting portion B221. The movement of the abutting member B27 will cause a movement of the control element G16 since the locking protrusion B272 of the abutting member B27 engages in the groove G164 of the control element G16. Thus, the control spring a3 is accordingly compressed. In this case, the clutch member 33 will be received in the big diameter portion G162 along with the movement of the control element 16, so that the positioning member G14 and the axial tube G15 are moveable relative to each other. Through this way, the shock-absorbing function is enabled. When the user pushes and releases the steel cord, the back-moving spring B26 will rotate the control shaft B22 and make it back to the original position. Accordingly, a space is formed between the eccentric abutting portion B221 and the abutting member B27, which allows the control spring a3 to move the abutting member B27 and then to move the control element G16. Then the small diameter portion G163 of the control element G16 pushes the clutch member 33 and make it engage in the positioning groove G143 of the positioning member G14, such that the positioning member G14 is locked with the axial tube G15. Thus, the shock-absorbing function is disabled.

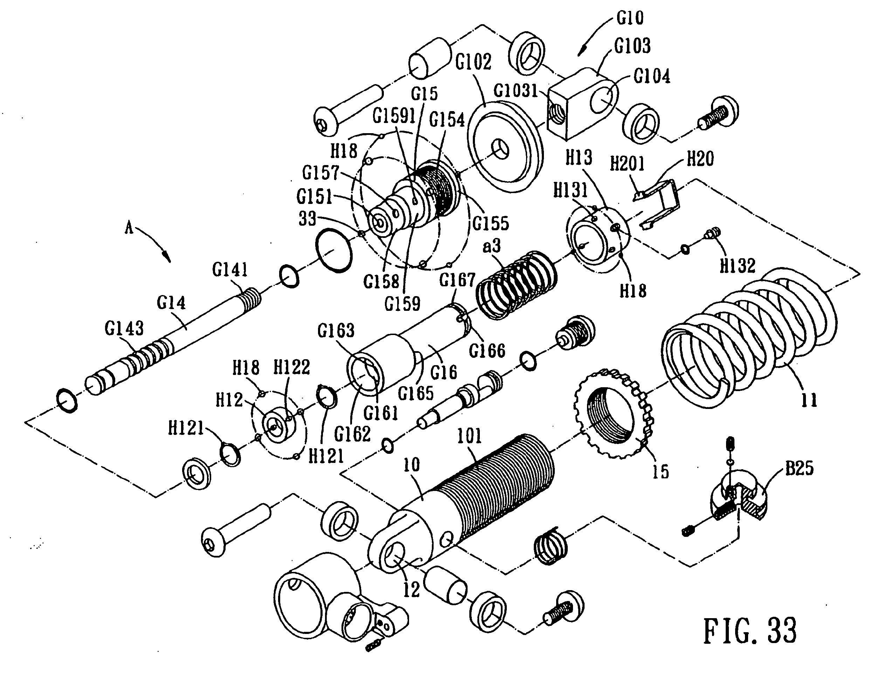

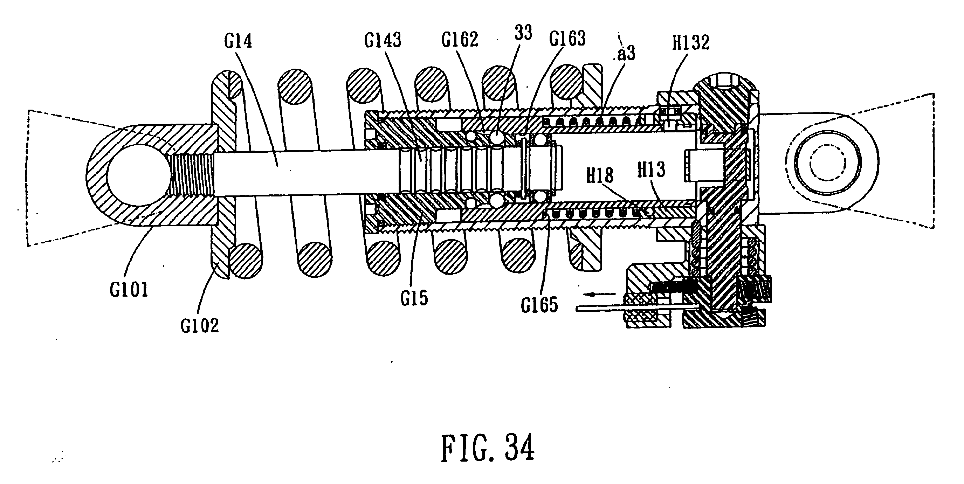

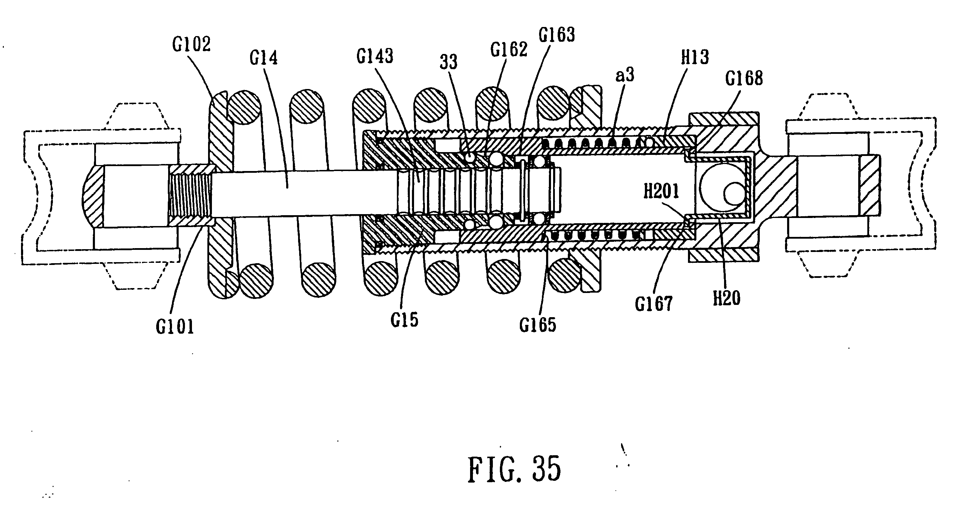

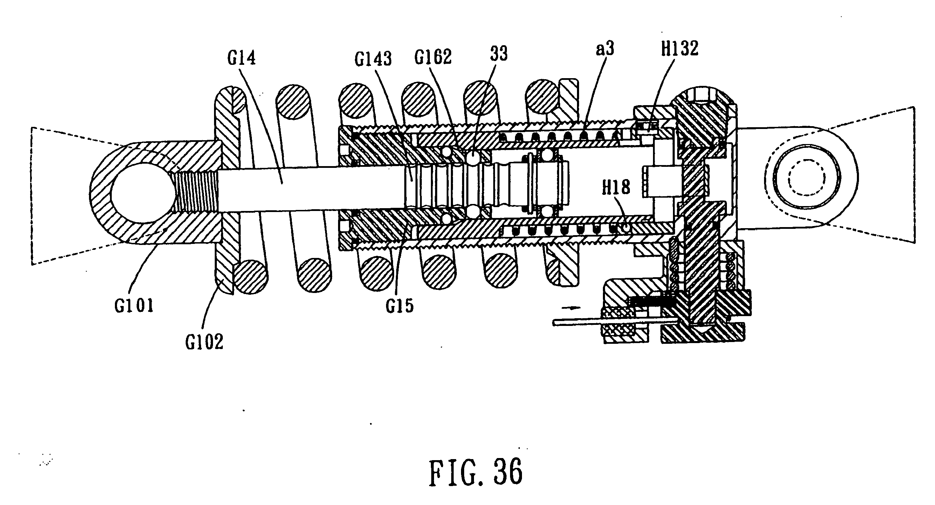

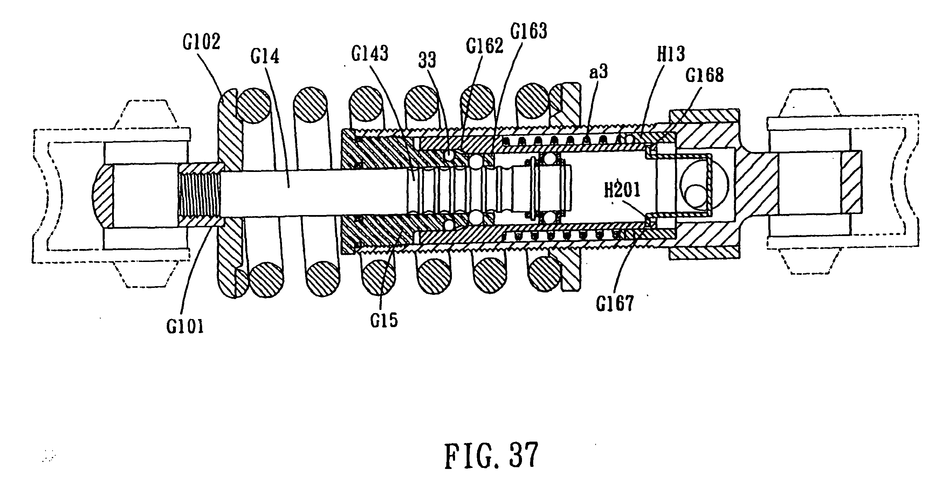

Referring to Figs. 33-37, a shock absorber for a bicycle in accordance with a tenth preferred embodiment of the present invention is shown and including a basement 10, an upper basement G10, a clutch assembly A and a shock-absorbing spring 11. The shock absorber in this embodiment adds an aid-sliding member H18 to the components of the ninth embodiment.

The basement 10 of this embodiment is identical with that of the ninth embodiment, which contains control assembly. A first end of the basement 10 is formed with a hole 12 which is to be engaged with the bike. An adjust ring 15 is screwed with the outer threads 101 on the basement 10. In the space 14 of the basement 10 close to the bottom thereof is disposed an inner slide bush H13 which is equipped with a steel-ball seat H131 for reception of the aid-sliding member H18. A positioning tip H132 is arranged between the basement 10 and the inner slide bush H13.

The upper basement G10 includes a block G103 and a flange G102. A first end of the block G103 is provided with hole G104 which is to be engaged with the bike, a second end of the block G103 is formed with inner threads G1031.

The clutch assembly A includes positioning member G14, axial tube G15, clutch member 33 and control element G16.

The outer threads G141 at a first end of the positioning member G 14 are meshed with the inner threads G 1031 of the block G103 of the upper basement G10. A second end of the positioning member G14 is used to fix a supporting seat H12 via two retaining members H121. The supporting seat H12 is provided at the peripheral side thereof with a through hole H122 for reception of plural aid-sliding member H18. On the outer periphery of the positioning member G14 is formed with plural positioning grooves G143.

The axial tube G15 is interiorly formed with a through hole G151. A first end of the axial tube G15 is provided with outer threads G154 and a protrusive flange G155 that are to be received in the space 14 of the basement 10. A second end of the axial tube G15 is provided with a first step periphery G158, on the outer surface of the first step periphery G158 is formed a positioning hole G157. Beside the positioning hole G157 is provided a second step periphery G159. The steel-ball seat G1591 is formed on the outer surface of the second step periphery G159 for reception of plural aid-sliding members H18.

The clutch member 33 is disposed in the positioning hole G157 of the axial tube G15 and corresponds to the plural positioning grooves G 143 of the positioning member G 14.

The control element G16, a first end of which is moveably disposed on the outer surface of the second step periphery G159 of the axial tube G15. An annular cone-shaped step portion G161 is formed in the control element G16 and divides the control element G16 into a big diameter portion G162 and a small diameter portion G163. Adjacent to the mid portion of the control element G16 is further provided an abutting portion G165. A second end of the control element G16 is slidably disposed in the inner slide bush H13 of the basement 10, and on the out periphery of this second end is formed with a positioning groove G166 and a groove G167. The positioning groove G166 serves to position the positioning tip H132 that is disposed in the basement 10 and the inner slide bush H13, so that the control element G16 can be moveably but non-rotatably disposed in the inner slide bush H13 and on the outer surface of the second periphery G 159 of the axial tube G15. The aid-sliding members H18 of the inner slide bush H13, the positioning member G14 and the axial tube G15 can enable the control element G16 to slide smoothly and stably. The aid-sliding members H18 disposed at the end of the positioning member G14 also can enable the positioning member G14 to smoothly and stably slide in the control element G16. Furthermore, the groove G167 formed at the end of the control element G16 is interiorly formed with two connecting holes G168 for respectively fixing two legs H201 of a connecting member H20.

The control spring a3 is biased between the abutting portion G165 of the control element G16 and an end of the inner slide bush H13.

The shock-absorbing spring 11 is biased between the adjust ring 15 and the flange G102 of the upper basement G10.

The disclosed technical characteristics of this embodiment are identical to that of the other respective embodiments and may be made without departing from the scope of the present invention.

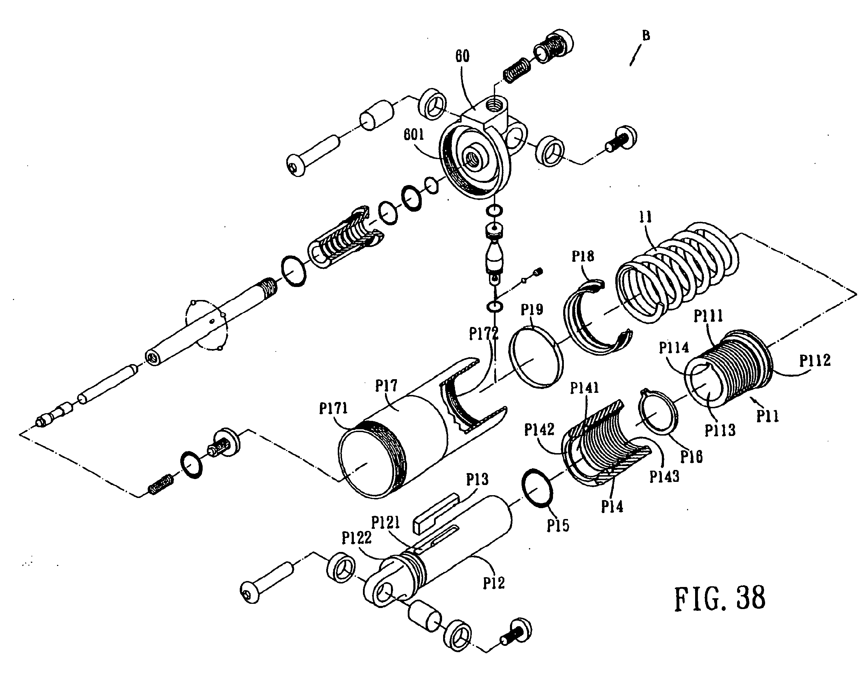

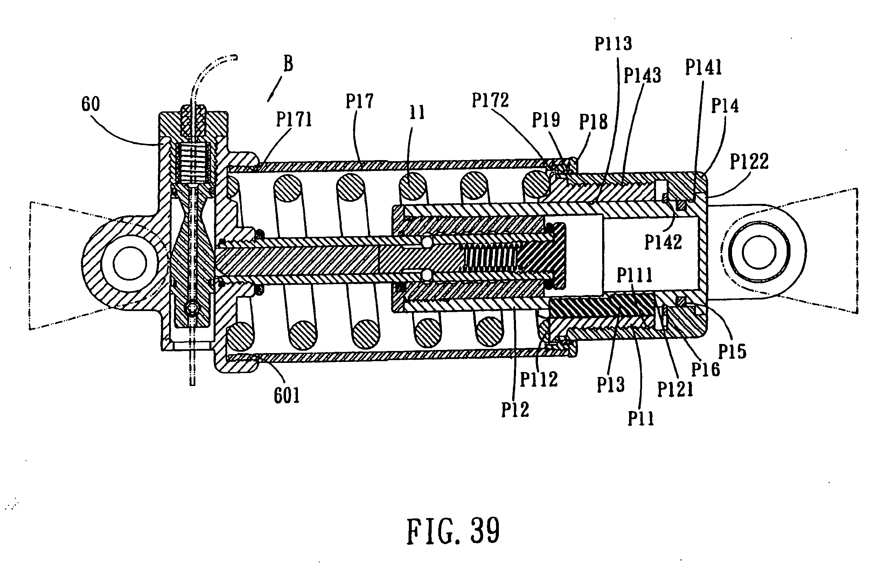

Referring to Figs. 38 and 39, a shock absorber for a bicycle in accordance with a eleventh embodiment of the present invention is shown, which moves the outer threads 101 of the basement 10 to the outer surface of a moveable ring P11. The moveable ring P11 is mounted on the outer periphery of the basement P12. On the outer periphery of the basement P12 is formed with a locking slot P121, a flange P122 and an annular groove P 123. The moveable ring P11 is provided on the outer periphery with outer threads P111, and on another side of the outer periphery is further formed with a flange P 112 which to be abutted by an end of the shock-absorbing spring 11. An inner hole P113 and a locking groove P114 are defined in the moveable ring P11. The inner hole P113 engages with the basement P12. In the locking slot P121 of the basement P12 and the locking groove P114 of the moveable ring P11 is disposed a positioning key P13 which enables the moveable ring P11 to be moveably but non-rotatably mounted on the outer periphery of the basement P12. An adjust ring P14 is interiorly provided at a side thereof with an inner hole P141 and an inner flange P142, at another side of the inner wall of the adjusting ring P14 is formed with inner threads P143. The inner hole P141 of the adjust ring P14 serves to engages with an end of the outer periphery of the basement P12 via a seal ring 15. The inner flange P142 is positioned to the flange P122 of the basement P12, and then with the help of a retaining ring P16, the adjust ring P12 is rotatably but immovably mounted on the outer periphery of the basement P12. The inner threads P143 inside the adjust ring P14 are meshed with the outer threads P111 on the moveable ring P11 so as to transmit motion. When the adjust ring P 14 rotates, the moveable ring P11 is actuated to move, meanwhile, the compressing force of the shock-absorbing spring 11 is adjusted. The base body 60 of he control assembly B is provided at a first end thereof with inner threads 601 which serve to be screwed with the outer threads P171 of an outer sleeve P17. Another end of the outer sleeve P 17 is interiorly provided with inner threads P172 which to be screwed with a lower cover P18. In the lower cover P18 is disposed an annular groove P181 for reception of a wearing ring P19. The wearing ring P19 is slidably mounted on the outer periphery of the adjust ring P14. The above is the structural description of the shock absorber of the eleventh embodiment, and the structure of the unmarked components are same as the first embodiment, and therefore, further remarks would be omitted.

The outer sleeve P17 of the eleventh embodiment can cover the shock-absorbing spring 11 inside and prevent it from contamination. Moreover, the positioning key P 13 makes the moveable ring P11 unrotatably slide on the outer periphery of the basement P12. However, the moveable ring P11 can be moved by the rotation of the adjust ring P 14, and the moveable ring P 11 can adjust the compressing force of the shock-absorbing spring 11.

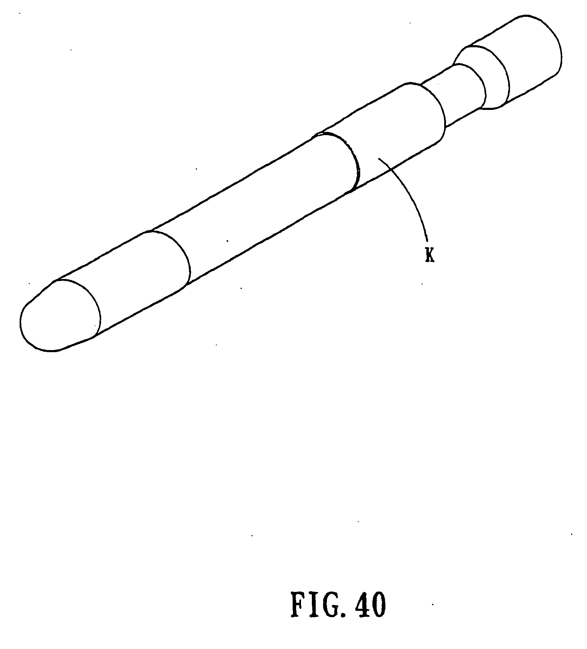

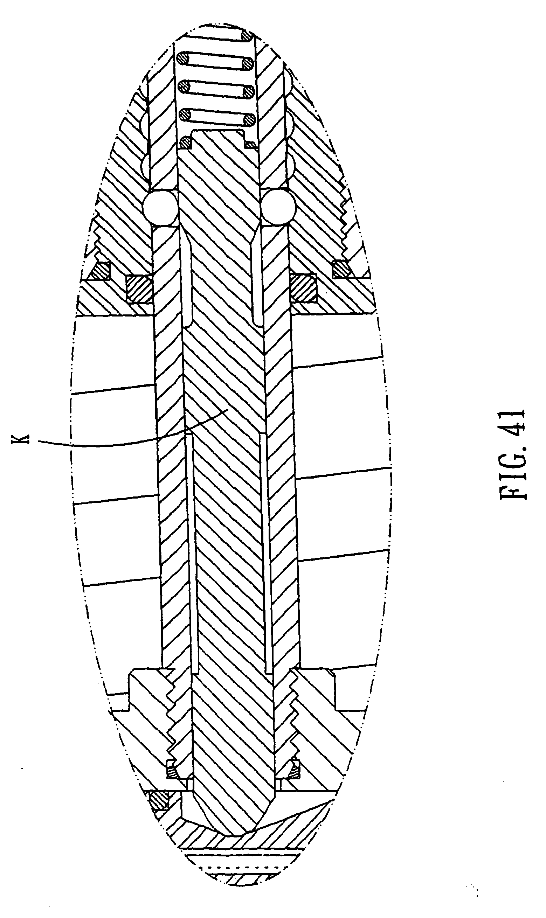

Referring to Figs. 40 and 41, which show a shock absorber for a bicycle in accordance with a twelfth embodiment of the present invention. The control member and the abutting member in the above-mentioned embodiments are used to perform abutting and pushing operation via other components, both of the control member and the abutting member can be integrally formed together under the condition that there is no problem of heat-treatment-caused deformation. Thereby, the control abutting member K is right the integral combination of the control member and the abutting member, which also can enable/disable the shock absorbing function of the shock absorber according to user's needs. The technical features in this embodiment are same as that of the other's embodiments and may be made without departing from the scope of the present invention.

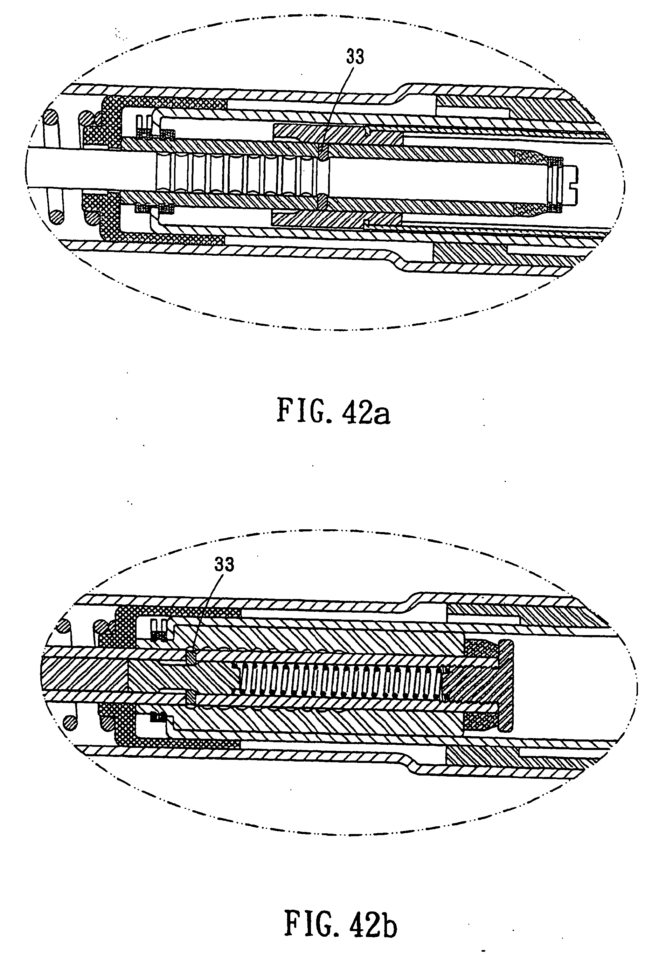

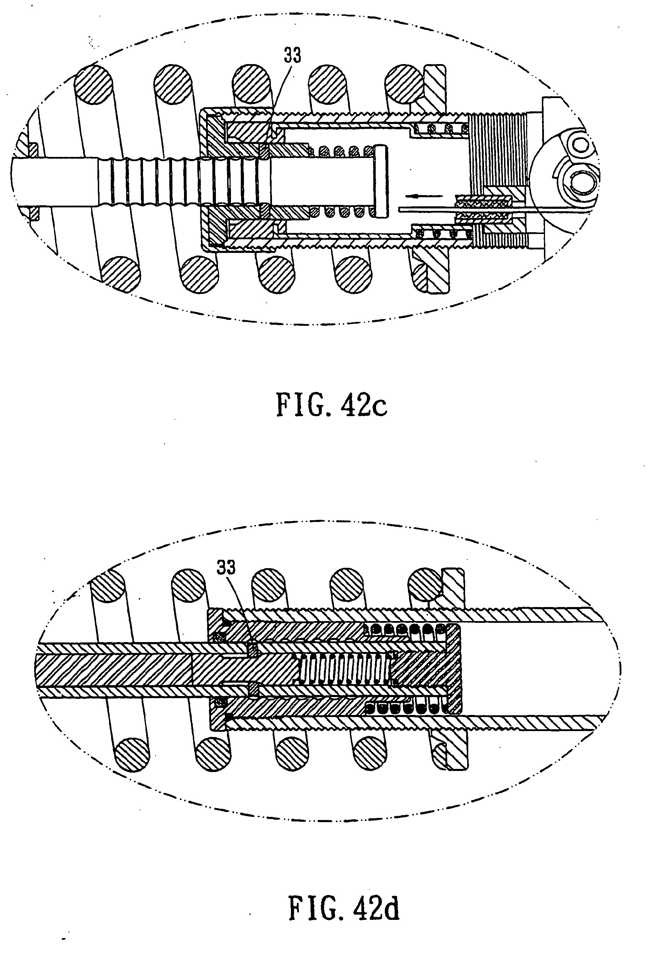

As shown in Figs. 42a-d, all the clutch members 33 in the above respective embodiments can be ball-shaped or cylinder-shaped.

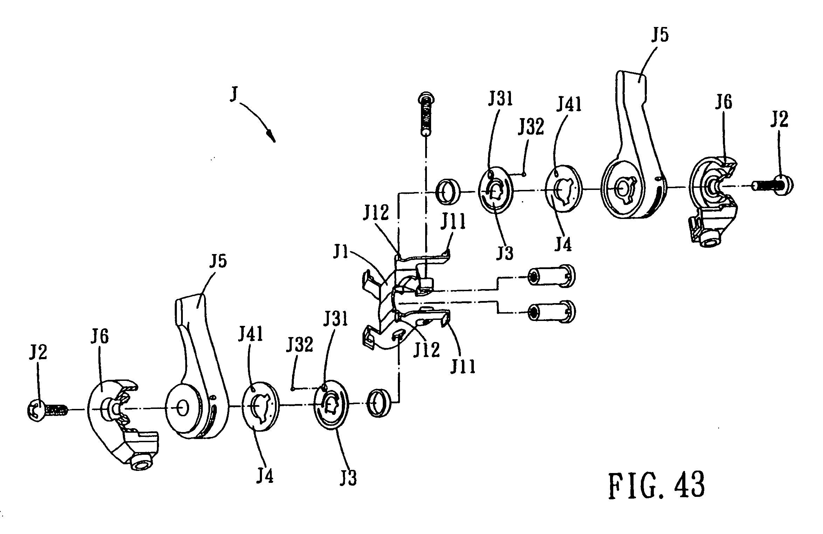

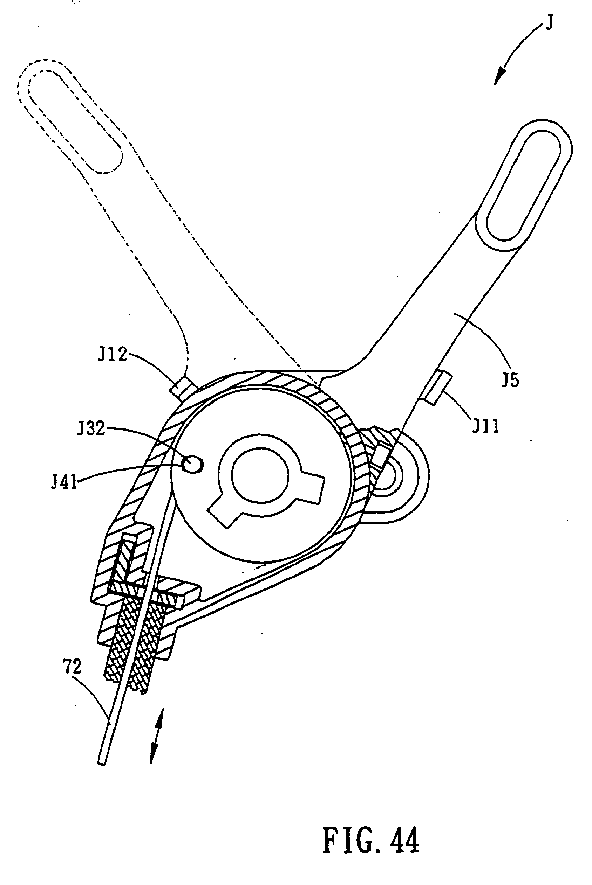

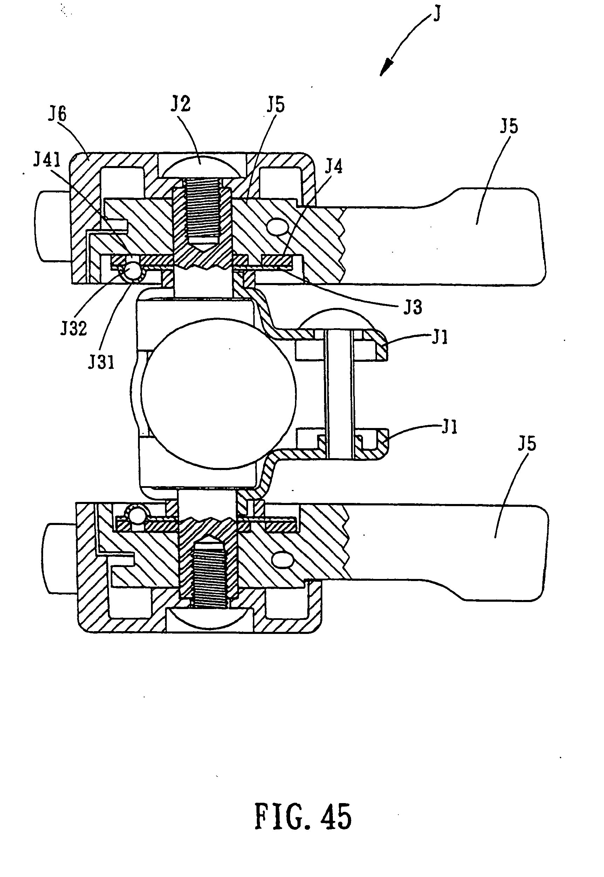

In addition, the operation manner of the steel cord 72 belongs to conventional skill. Here, Figs. 43-45 particularly disclose a preferred steel-cord control handle J in accordance with the present invention. The control handle J is directly mounted on the handle bar of a bike, which includes an elastic plate J3, a positioning disc J4, a handle J5 and a cover J6 are disposed on a base body J1 by a screw J2. The elastic plate J3 engages in the base body J1, and a groove J31 is formed on the elastic plate J3 for reception of a steel ball J32. The positioning disc J4 is mounted on the handle J5, at a position on the positioning disc J4 corresponding to the steel ball J32 and the position for pulling the steel cord 72 is formed with a positioning hole J41. The elastic plate J3 elastically abuts against the steel ball J32 and confines it in the positioning hole J41, and synchronously positions the steel cord 72. The base body J1 is provided with a first protrusive portion J11 which is to be abutted by an end of the handle J5. A second protrusive portion J12 is provided on the base body J1, such that the handle can rest on the second protrusive portion J 12 when pulling and releasing the steel cord 72.

By using the above-mentioned control handle J, the user is able to control the steel cord 72 on the handle bar. When pulling the steel cord 72 by rotating the handle J5 toward the first protrusive portion J11, the positioning hole J41 on the positioning disc J4 of the handle J5 will be engaged with the steel ball J32 in the groove J31 of the elastic plate J3. When the user rotates the handle J5 in an opposite direction, the handle J5 will release the steel cord 72 and makes it rest on the second protrusive portion J12 of the base body J1. Hence, the steel cord 72 can be controlled by the user to enable/disable the shock function of the shock absorber.

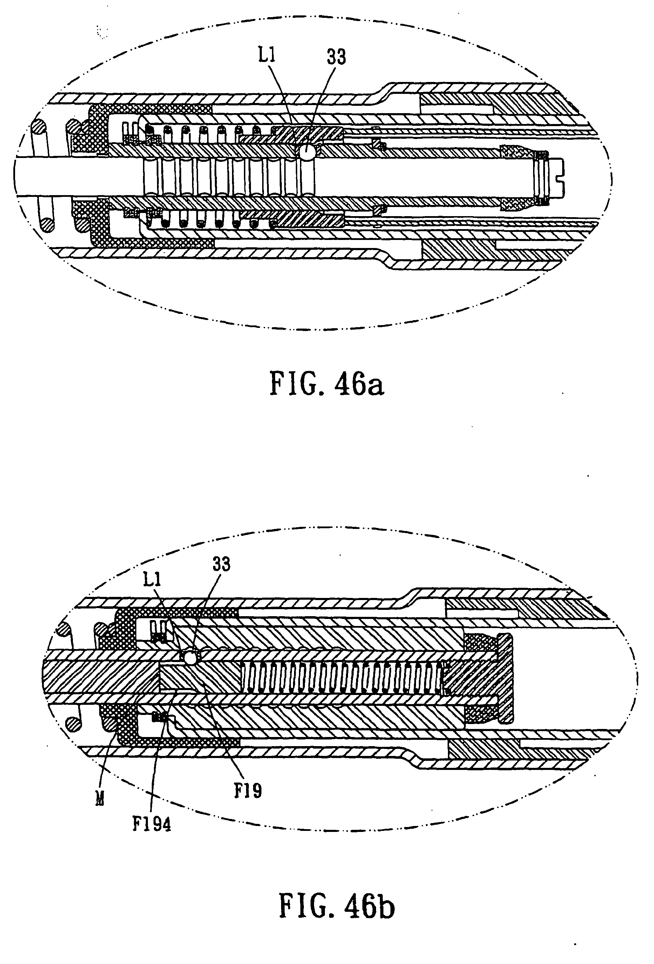

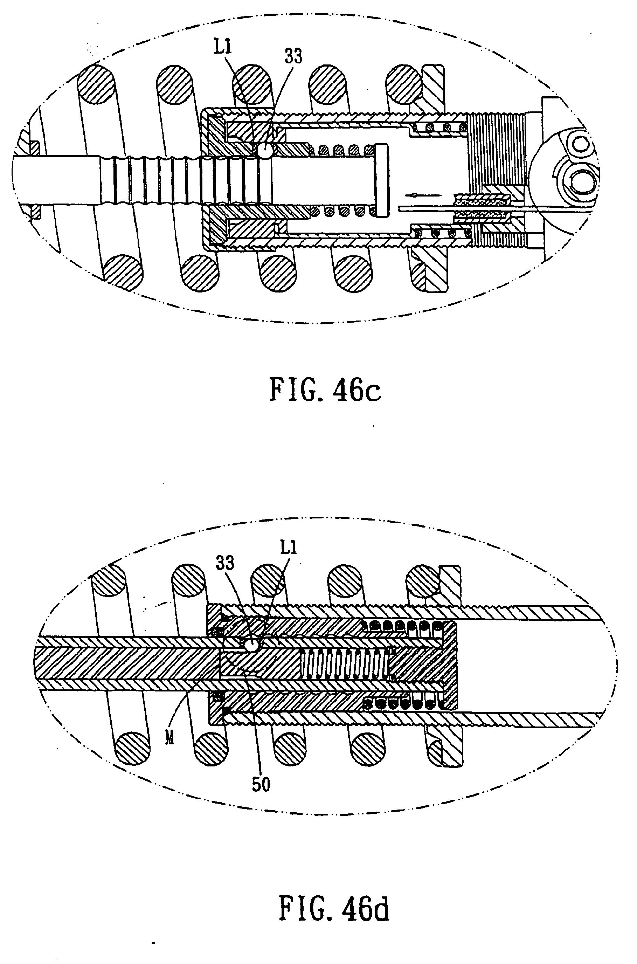

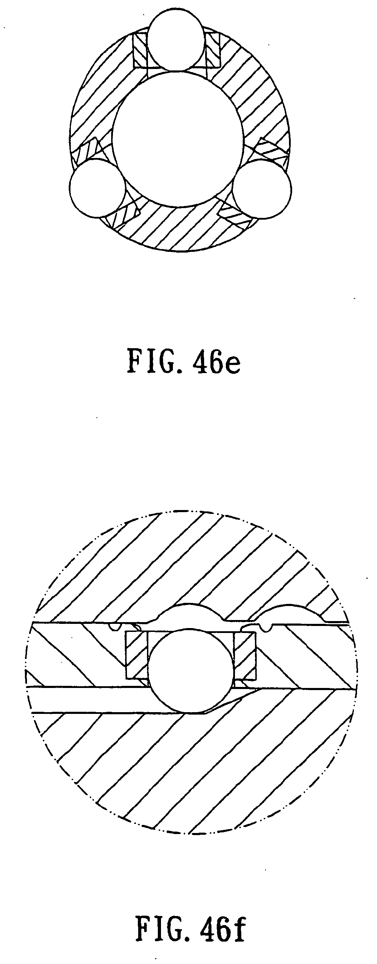

Referring to Figs. 46a-f, in each of the positioning holes of the axial tube is received a positioning bush L1 (since the reference No of the axial tubes in the respective embodiments are different, here the axial tube is unmarked). An end of the respective positioning holes is formed with an inner flange L2 which enables the positioning bush L1 to be positioned in the positioning hole of the axial bush. An end of the positioning bush 11 abuts against the inner flange 12, while another of the positioning bush 11 is stopped by a concave deformation L3 which is formed on the peripheral side of the axial tube and located beside the locating hole of the axial tube, such that the positioning bush is positioned in the locating hole of the axial tube.

As shown in Fig. 46b, an end of the control element F19 of the clutch assembly is formed with a small diameter portion F194, and another end of the same is formed with a big diameter portion F193, an end surface M of the small diameter portion F194 abuts against an end of the abutting member of the control assembly.

While we have shown and described various embodiments in accordance with the present invention, it should be clear to those skilled in the art that further embodiments may be made without departing from the scope of the present invention as defined by the appended claims.

## Claims

1. A shock absorber for a bicycle comprising a basement (10, 90, F10, P12), a clutch assembly (A), a control assembly (B) and a shock-absorbing spring (11, 91, F9), the shock-absorbing spring (11, 91, F9) providing damper elastic force for the respective components of the shock absorber , the clutch assembly (A) comprising a positioning member (20, A 10, F 15, G 14), an axial tube (30, A11, F16, G15), a clutch member (33) and a control element (50, A 14, F19, G16), the positioning member (20, A10, F15, G14) is formed with the positioning grooves (26, A101, F 152, G 143), the axial tube (30, A11, F16, G 15) is formed with positioning holes (32, A13, F163, G 157), the positioning member (20, A10, F15, G14) and the axial tube (30, A 11, F16, G15) are telescopically disposed, the clutch member (33) is received in the positioning holes (32, A 13, F 163, G157) of the axial tube (30, A 11, F 16, G15); the shock absorber is **characterized in that**:
the control element (50, A 14, F 19, G16) is formed with annular cone-shaped step portion (A141, F192, G161) that divides the control element (50, A14, F19, G16)) into a big diameter portion (53, A142, F193, G 162) and a small diameter portion (54, A143, F194, G163), the big diameter portion (53, A142, F193, G162) and the small diameter portion (54, A143, F194, G163) serve to push the clutch member (33) to move, motion of the clutch member (33) can produce relative slide and engagement between the positioning member (20, A10, F15, G 14) and the axial tube (30, A11, F16, G 15), through this way, the shock-absorbing function of the shock absorber can be enabled/disabled.

2. The shock absorber for a bicycle as claimed in claim.1, wherein:
the basement (10, 90, F10, P12), a first end of which is fixable to a body of a bike and a second end of which is formed with a mouth (13) in communication with a space (14) inside the basement (10, 90, F10, P12);
the clutch assembly (A) comprises a positioning member (20, A10, F15, G14), an axial tube (30, A11, F16, G15), a clutch member (33) and a control element (50, A14, F19, G16), the positioning member (20, A10, F 15, G14) is disposed in the space (14) of the basement (10, 90, F10, P12) and provided with a through hole (25, F151), the positioning member (20, A10, F 15, G14) and the axial tube (30, A11, F16, G15) are telescopically disposed, the clutch member (33) is received in the positioning holes (32; A13, F163, G157) of the axial tube (30, A11, F16, G15) and corresponds to the positioning grooves (26, A101, F152, G 143) of the positioning member (20, A10, F 15, G 14), the control element(50, A 14, F 19, G 16) is disposed in a through hole (31, A111, F161, G151) of the axial tube (30, A11, F16, G15) and formed with annular cone-shaped step portion (A 141, F 192, G161) that divides the control element (50, A14, F19, G16) into a big diameter portion (53, A 142, F 193, G 162) and a small diameter portion (54, A 143, F 194, G 163), the big diameter portion (53, A 142, F 193, G 162) and the small diameter portion (54, A 143, F 194, G163) serve to abut against the clutch member (33), the control element (50, A14, F19, G 16) controls the motion of the clutch member (33);
the control assembly (B) is fixable to the body of a bike and connected to an end of the axial tube (30, A11, F16, G15), the control assembly (B) includes a control shaft and (70, B11, B22, E18, F22) a control spring (a3), the control shaft (70, B11, B22, E18, F22) is controlled by a steel cord (72), the control shaft (70, B11, B22, E18, F22) and the control spring (a3) move the control element (50, A14, F 19, G16) of the clutch assembly (A);
the shock-absorbing spring (11, 91, F9) is mounted on exterior of the basement (10, 90, F10, P12) and biased between the control assembly (B) and the basement (10, 90, F105, P12).

3. The shock absorber for a bicycle as claimed in claim 1, wherein:
the clutch assembly (A) comprises a positioning member (20, A10; F15, G14), an axial tube (30, A11, F16, G15), a clutch member (33) and a control element (50, A14, F19, G16), on outer periphery of the positioning member (20, A10, F15, G14) is provided with the positioning grooves (26, A101, F152, G 143), the axial tube (30, A11, F 16, G 15) is formed through hole (31, A111, F161, G151) and on the positioning holes (32, A13, F163, G157) is formed on the peripheral side of the axial tube (30, A11, F16, G15), the positioning member (20, A10, F15, G 14) and the axial tube (30, A11, F16, G15) are telescopically disposed, the axial tube (30, A11, F16, G15) is received in the space (14) of the basement (10, 90, F10, P12), the clutch member (33) is received in the positioning holes (32, A13, F163, G 157) of the axial tube (30, A11, F16, G15) and corresponds to the positioning grooves (26, A101, F 152, G 143) of the positioning member (20, A10, F 15, G 14), the control element (50, A 14, F 19, G16) is mounted on the exterior of the axial tube (30, A11, F16, G15) and formed with annular cone-shaped step portion (A141, F192, G161) that divides the control element (50, A 14, F19, G16) into a big diameter portion (53, A142, F 193, G162) and a small diameter portion (54, A143, F 194, G163), the big diameter portion (53, A142, F193, G162) and the small diameter portion (54, A143, F194, G163) serve to abut against the clutch member (33), the control element (50, A 14, F 19, G16) controls the motion of the clutch member (33).

4. The shock absorber for a bicycle as claimed in claim 1, wherein:
the basement (10, 90, F10, P12), a first end of which is fixable to body of a bike and a second end of which is received with a receiving tube (904, F14), a first end of the receiving tube (904, F14) is moveably disposed in the basement (10, 90, F10, P12), and a second of the receiving tube (904, F14) is fixable to a corresponding position on the body of a bike, the receiving tube (904, F 14) is able to move relative to the basement (10, 90, F10, P12);
the clutch assembly (A) comprises a positioning member (20, A10, F15, G14), an axial tube (30, A11, F16, G15), a clutch member (33) and a control element (50, A14, F19, G16), the positioning member (20, A10, F15, G14) is disposed in the basement (10, 90, F10, P12) and provided on the outer periphery thereof with the positioning grooves (26, A101, F152, G143), the axial tube (30, A11, F16, G 15) is disposed in the receiving tube (904, F14) of the basement (10, 90, F10, P12), the through hole (31, A111, F161, G151) of the axial tube (30, A11, F16, G15) is provided for insertion of the positioning member (20, A10, F15; G 14), the positioning holes (32, A13, F163, G157) are formed on the peripheral side of the axial tube (30, A11, F16, G15) and correspond to the positioning grooves (26, A101, F152, G143) of the positioning member (20, A10, F 15, G14), the clutch member (33) is received in the positioning hole (32, A13, F163, G157) of the axial tube (30, A11, F16, G15), the control element (50, A 14, F19, G16) is mounted on the exterior of the axial tube (30, A11, F16, G15) and formed with annular cone-shaped step portion (A 141, F192, G161) that divides the control element (50, A14, F19, G16) into a big diameter portion (53, A 142, F 193, G162) and a small diameter portion (54, A 143, F194, G163), the big diameter portion (53, A142, F193, G162) and the small diameter portion (54, A143, F194, G163) serve to abut against the clutch member (33), the control element (50, A14, F19, G16) controls the motion of the clutch member (33);
the control assembly (B) is positioned at an end of the receiving tube (904, F 14) of the basement (10, 90, F 10, P12);
the shock-absorbing spring (11, 91, F9) is received in the basement (10, 90, F10, P12) and biased between the control assembly (B) and the basement (10, 90, F10, P12).

5. The shock absorber for a bicycle as claimed in claim 1, wherein:
the clutch assembly (A) comprises a positioning member (20, A10, F15, G14), an axial tube (30, A11, F16, G15), a clutch member (33) and a control element (50, A14, F19, G16), the positioning member (20, A10, F15, G14) disposed in the receiving tube (904, F14) of the basement (10, 90, F10, P12) and formed with the through hole (25, F151), inside the positioning member (20, A 10, F 15, G 14) is formed with the positioning grooves (26, A 101, F152, G143), the axial tube (30, A11, F16, G15) is disposed in the receiving tube (904, F14) of the basement (10, 90, F10, P12), the axial tube (30, A11, F16, G15) is hollow and formed with a through hole (31, A111, F161, G151), the positioning holes (32, A13, F163, G157) are formed on the peripheral side of the axial tube (30, A11, F 16, G 15) and correspond to the positioning grooves (26, A101, F152, G143) of the positioning member (20, A10, F15, G14), the axial tube (30, A11, F16, G15) is disposed in the basement (10, 90, F 10, P 12), the clutch member (33) is received in the positioning hole (32, A13, F163, G157) of the axial tube (30, A 11, F 16, G 15) and corresponds to the positioning grooves (26, A 101, F152, G 143) of the positioning member (20, A10, F 15, G14), the control element (50, A 14, F 19, G16) is received in the through hole (31, A111, F161, G151) of the axial tube (30, A11, F16, G15) and formed with annular cone-shaped step portion (A 141, F 192, G161) that divides the control element (50, A14, F19, G16) into a big diameter portion (53, A 142, F 193, G162) and a small diameter portion (54, A 143, F 194, G163), the big diameter portion (53, A142, F193, G162) and the small diameter portion (54, A143, F194, G163) serve to abut against the clutch member (33), the control element (50, A14, F19, G16) controls the motion of the clutch member (33);

6. The shock absorber for a bicycle as claimed in claim 1, wherein:
the control assembly (B) includes a base body (60, B 10, B20, E1, F20), the control shaft (70, B11, B22, E 18, F22), the control spring (a3), the back-moving spring (75, B 13, B23, E 17, F23, B26) and an abutting member (76, B 14, B27, E14, F 18), the base body (60, B10, B20, E1, F20) is formed with a control hole (63, B202, E12) for reception of the control shaft (70, B11, B22, E18, F22), the control shaft (70, B11, B22, E18, F22) is under control of the steel cord (72), the steel cord (72) is controllable by user, on outer periphery of the control shaft (70, B11, B22, E 18, F22) is formed with the groove (73, E 185, F22) and the annular cone-shaped surface (74, E 186, F222), a first end of the abutting member (76, B14, B27, E14, F18) is formed with an arc surface (761, F241) which is used to abut against the groove (73, E185, F22) and the annular cone-shaped surface (74, E 186, F222) of the control shaft (70, B11, B22, E 18, F22), a second end of the abutting member (76, B14, B27, E14, F18) abuts against an end of the control element (50, A14, F19, G16) of the clutch assembly (A), another end of the control element (50, A14, F19, G16) abuts against the control spring (a3), with the help of the groove (73, E185, F22) and the annular cone-shaped surface (74, E186, F222), the control shaft (70, B11, B22, E18, F22) can work with the control spring (a3) to move the control element (50, A14, F19, G16) of the clutch assembly (A), the control spring (a3) is compressed by the movement of the control shaft (70, B11, B22, E 18, F22) and then pushes the control element (50, A14, F19, G16) of the clutch assembly (A) to move with the compressed elastic force.

7. The shock absorber for a bicycle as claimed in-claim 1, wherein:
the control assembly (B) includes the base body (60, B10, B20, E1, F20), the control shaft (70, B11, B22, E18, F22), the control spring (a3), the back-moving spring (75, B13, B23, E17, F23, B26), the abutting member (76, B14, B27, E14, F18) and a rotary knob (B12, B21, B25), the base body (60, B10, B20, E1, F20) is formed with the control hole (63, B202, E12) for reception of the control shaft (70, B11, B22, E 18, F22), the control shaft (70, B11, B22, E18, F22) is able to rotate after being pulled by the steel cord (72), the control shaft (70, B11, B22, E 18, F22) is formed with an eccentric abutting portion (B221) which is used to abut against the first end of the abutting member (76, B 14, B27, E 14, F18), the second end of the abutting member (76, B 14, B27, E14, F 18) serves to abut against the control element (50, A 14, F 19, G 16) of the clutch assembly (A), the eccentric abutting portion (B221) will rotate during rotation of the control shaft (70, B11, B22, E18, F22) and will move the abutting member (76, B 14, B27, E 14, F18) and the control element (50, A 14, F19, G16) of the clutch assembly (A), at the moment, the rotation of the control shaft (70, B 11, B22, E 18, F22) causes compression of the control spring (a3) and the back-moving spring (75, B13, B23, E17, F23, B26), the back-moving spring (75, B 13, B23, E17, F23, B26) pushes the control shaft (70, B11, B22, E18, F22) to its original position with the compressed elastic force, the control spring (a3) abuts against the control element (50, A14, F19, G16) with one end and moves the control element (50, A14, F19, G16) with its compressed elastic force.

8. The shock absorber for a bicycle as claimed in claim 1, wherein:
the control assembly (B) includes the base body (60, B10, B20, E1, F20), the control shaft (70, B11, B22, E18, F22), the control spring (a3), the back-moving spring (75, B13, B23, E 17, F23, B26) and the abutting member (76, B 14, B27, E14, F 18), the base body (60, B 10, B20, E1, F20) is formed with a through hole (B104, F102) for reception of a first end of the control shaft (70, B11, B22, E18, F22), a second end of the control shaft (70, B11, B22, E18, F22) is provided with driving threads (B113), the first end of the abutting member (76, B 14, B27, E14, F 18) is formed with driving threads (B1411)that are to be meshed with the driving threads (B113) of the control shaft (70, B11, B22, E18, F22) for motion-transmitting purpose, the second end of the abutting member (76, B14, B27, E 14, F 18) abuts against the control element (50, A 14, F19, G16) of the clutch assembly (A), the control shaft (70, B11, B22, E18, F22) is under control of the steel cord (72), and the steel cord (72) is controllable by user, the rotation of the control shaft (70, B 11, B22, E 18, F22) causes movement of the abutting member (76, B 14, B27, E 14, F 18) and further causes motion of the control element (50, A14, F19, G 16), the back-moving spring (75, B13, B23, E17, F23, B26) pushes the control shaft (70, B11, B22, E 18, F22) to its original position with the compressed elastic force, the control spring (a3) abuts against the control element (50, A 14, F 19, G16) with one end and moves the control element (50, A 14, F 19, G16) with its compressed elastic force.

9. The shock absorber for a bicycle as claimed inclaim 1, wherein:
the control assembly (B) includes the base body (60, B10, B20, E1, F20), the control shaft (70, B11, B22, E18, F22), the control spring (a3), the back-moving spring (75, B13, B23, E17, F23, B26) and the abutting member (76, B 14, B27, E 14, F 18), the eccentric abutting portion (B221) of the control shaft (70, B11, B22, E 18, F22) abuts against the first end of the abutting member (76, B14, B27, E14, F18), the second end of abutting member (76, B14, B27, E14, F18) abuts against the control element (50, A14, F19, G16) of the clutch assembly (A), the eccentric abutting portion (B221) will rotate during rotation of the control shaft (70, B 11, B22, E 18, F22) and synchronously will move the abutting member (76, B14, B27, E14, F18) and the control element (50, A14, F 19, G 16) of the clutch assembly (A).

## Patentansprüche

1. Stoßdämpfer mit einem Gehäuse (10, 90, F10, P12), einer Kupplungs-/Betätigungsbaugruppe (A), einer Steuereinheit (B) und einer Stoßdämpfungsfeder (11, 91, F9), wobei die Stoßdämpfungsfeder (11, 91, F9) eine federnde Stoßdämpfungskraft für alle Stoßdämpfungskomponenten zur Verfügung stellt, und wobei die Kupplungs-/Betätigungsbaugruppe (A) ein Positionierelement (20, A10, F15, G14), eine Stoßdämpfungshülse (30, A11, F16, G15), Kupplungselemente (33) und ein Steuerelement (50, A14, F19, G16) umfasst, und wobei Positionierelement (20, A10, F15, G14) mit Positioniernuten (26, A101, F152, G143) versehen ist, während die Stoßdämpfungshülse (30, A11, F16, G15) mit Positionierlöchern (32, A13, F163, G157) versehen ist, und wobei das Positionierelement (20, A10, F15, G14) und die Stoßdämpfungshülse (30, A11, F16, G15) federnd angeordnet ist, und wobei sich die Kupplungselemente (33) in den jeweiligen Positionierlöchern (32, A13, F163, G157) der Stoßdämpfungshülse (30, A11, F16, G15) befinden,
**dadurch gekennzeichnet,**
**dass** das Steuerelement (50, A14, F19, G16) einen Konus (A141, F192, G161) aufweist, mit dem das Steuerelement (50, A14, F19, G16) in einen Großabschnitt (53, A142, F193, G162) und einen Kleinabschnitt (54, A143, F194, G163) unterteilbar ist, wobei der Großabschnitt (53, A142, F193, G162) und der Kleinabschnitt (54, A143, F194, G163) gegen die Kupplungselemente (33) drückbar sind, und wobei eine relative Verschiebung und Blockierung zwischen dem Positionierelement (20, A10, F15, G14) und der Stoßdämpfungshülse (30, A11, F16, G15) durch die Kupplungselemente (33) zustande kommen, wodurch die Stoßdämpfungsfunktion des Stoßdämpfers steuerbar ist.

2. Stoßdämpfer nach Anspruch 1,
**dadurch gekennzeichnet,**
- **dass** ein Ende des Gehäuses (10, 90, F10, P12) an einer Karosserie angebracht ist, während das andere Ende eine Öffnung (13) aufweist, von der aus sich ein Betätigungsraum (14) nach innen erstreckt;
- **dass** die Kupplungs-/Betätigungsbaugruppe (A) ein Positionierelement (20, A10, F15, G14), eine Stoßdämpfungshülse (30, A11, F16, G15), Kupplungselemente (33) und ein Steuerelement (50, A14, F19, G16) umfasst, wobei das Positionierelement (20, A10, F15, G14) im Inneren des Betätigungsraums (14) des Gehäuses (10, 90, F10, P12) vorgesehen und mit einem Hohldurchgang (25, F151) versehen ist, und wobei das Positionierelement (20, A10, F15, G14) innen mehrere Positioniernuten (26, A101, F152, G143) aufweist, und wobei das Positionierelement (20, A10, F15, G14) auf die Stoßdämpfungshülse (30, A11, F16, G15) aufsteckbar ist, und wobei sich die Kupplungselemente (33) in den jeweiligen Positionierlöchern (32, A13, F163, G157) der Stoßdämpfungshülse (30, A11, F16, G15) befinden und nach den jeweiligen Positioniernuten (26, A101, F152, G143) des Positionierelements (20, A10, F15, G14) ausgerichtet sind, und wobei das Steuerelement (50, A14, F19, G16) in einer Durchgangsbohrung (31, A11, F16, G15) der Stoßdämpfungshülse (30, A11, F16, G15) vorgesehen und mit einem Konus (A141, F192, G161) versehen ist, mit dem das Steuerelement (50, A14, F19, G16) in einen Großabschnitt (53, A142, F193, G162) und einen Kleinabschnitt (54, A143, F194, G163) unterteilbar ist, und wobei der Großabschnitt (53, A142, F193, G162) und der Kleinabschnitt (54, A143, F194, G163) des Steuerelements (50, A14, F19, G16) gegen die Kupplungselemente (33) drückbar sind, und wobei das Steuerelement (50, A14, F19, G16) die Betätigung der Kupplungselemente (33) steuert;
- **dass** die Steuereinheit (B) an einer Karosserie angebracht und mit einem Steuerzapfen (70, B11, B22, E18, F22) versehen ist, wobei die Steuereinheit (B) durch ein Stahldrahtseil (72) derart verschiebbar ist, dass das Steuerelement (50, A14, F19, G16) der Kupplungs-/Betätigungsbaugruppe (A) betätigt wird, indem der Steuerzapfen (70, B11, B22, E18, F22) gegen eine Steuerfeder (a3) gedrückt wird; und
- **dass** die Stoßdämpfungsfeder (11, 91, F9) außen auf das Gehäuse (10, 90, F10, P12) aufsetzbar und zwischen der Steuereinheit (B) und dem Gehäuse (10, 90, F10, P12) arbeitet.

3. Stoßdämpfer nach Anspruch 1,
**dadurch gekennzeichnet,**
**dass** die Kupplungs-/Betätigungsbaugruppe (A) ein Positionierelement (20, A10, F15, G14), eine Stoßdämpfungshülse (30, A11, F16, G15), Kupplungselemente (33) und ein Steuerelement (50, A14, F19, G16) besitzt, wobei das Positionierelement (20, A10, F15, G14) außen mehrere Positioniernuten (26, A101, F152, G143) aufweist, und wobei die Stoßdämpfungshülse (30, A11, F16, G15) innen über eine Durchgangsbohrung (31, A11, F16, G15) und in radialer Richtung über Positionierlöcher (32, A13, F163, G157) verfügt, und wobei das Positionierelement (20, A10, F15, G14) auf der Stoßdämpfungshülse (30, A11, F16, G15) montierbar ist, während die Stoßdämpfungshülse (30, A11, F16, G15) im Inneren des Betätigungsraums (14) des Gehäuses (10, 90, F10, P12) befindet, und wobei die Kupplungselemente (33) in den jeweiligen Positionierlöchern (32, A13, F163, G157) der Stoßdämpfungshülse (30, A11, F16, G15) gelagert und nach den jeweiligen Positioniernuten (26, A101, F152, G143) des Positionierelements (20, A10, F15, G14) ausgerichtet sind, und wobei das Steuerelement (50, A14, F19, G16) außen auf der Stoßdämpfungshülse (30, A11, F16, G15) aufsetzbar und mit einem Konus (A141, F192, G161) versehen ist, mit dem das Steuerelement (50, A14, F19, G16) in einen Großabschnitt (53, A142, F193, G162) und einen Kleinabschnitt (54, A143, F194, G163) unterteilbar ist, und wobei der Großabschnitt (53, A142, F193, G162) und der Kleinabschnitt (54, A143, F194, G163) des Steuerelements (50, A14, F19, G16) gegen die Kupplungselemente (33) drückbar sind, und wobei das Steuerelement (50, A14, F19, G16) die Betätigung der Kupplungselemente (33) steuert.

4. Stoßdämpfer nach Anspruch 1,
**dadurch gekennzeichnet,**
- **dass** ein Ende des Gehäuses (10, 90, F10, P12) an einer Karosserie angebracht ist, während im anderen Ende ein Aufnahmerohr (904, F14) aufweist, dessen erstes Ende im Gehäuse (10, 90, F10, P12) verschiebbar und dessen anderes Ende an der Karosserie angebracht ist, wobei sich eine relative Verschiebung zwischen dem Aufnahmerohr (904, F14) und dem Gehäuse (10, 90, F10, P12) unter Einwirkung von Kräften auf die Karosserie ergibt;
- **dass** die Kupplungs-/Betätigungsbaugruppe (A) ein Positionierelement (20, A10, F15, G14), eine Stoßdämpfungshülse (30, A11, F16, G15), Kupplungselemente (33) und ein Steuerelement (50, A14, F19, G16) umfasst, wobei das Positionierelement (20, A10, F15, G14) im Inneren des Gehäuses (10, 90, F10, P12) vorgesehen ist und außen mehrere Positioniernuten (26, A101, F152, G143) aufweist, und wobei die Stoßdämpfungshülse (30, A11, F16, G15) im Inneren des Aufnahmerohrs (904, F14) des Gehäuses (10, 90, F10, P12) positioniert und innen mit einer Durchgangsbohrung (31, A11, F16, G15) versehen ist, durch die das Positionierelement (20, A10, F15, G14) hindurchführbar ist, und wobei die Stoßdämpfungshülse (30, A11, F16, G15) in radialer Richtung mehrere Positionierlöcher (32, A13, F163, G157) aufweist, die nach den jeweiligen Positioniernuten (26, A101, F152, G143) des Positionierelements (20, A10, F15, G14) ausgerichtet sind, und wobei sich die Kupplungselemente (33) in den jeweiligen Positionierlöchern (32, A13, F163, G157) der Stoßdämpfungshülse (30, A11, F16, G15) befinden, und wobei das Steuerelement (50, A14, F19, G16) außen auf der Stoßdämpfungshülse (30, A11, F16, G15) aufsetzbar und mit einem Konus (A141, F192, G161) versehen ist, mit dem das Steuerelement (50, A14, F19, G16) in einen Großabschnitt (53, A142, F193, G162) und einen Kleinabschnitt (54, A143, F194, G163) unterteilbar ist, und wobei der Großabschnitt (53, A142, F193, G162) und der Kleinabschnitt (54, A143, F194, G163) des Steuerelements (50, A14, F19, G16) gegen die Kupplungselemente (33) drückbar sind, und wobei das Steuerelement (50, A14, F19, G16) die Betätigung der Kupplungselemente (33) steuert;
- **dass** die Steuereinheit (B) an einem Ende des Aufnahmerohrs (904, F14) des Gehäuses (10, 90, F10, P12) angebracht ist; und
- **dass** die Stoßdämpfungsfeder (11, 91, F9) im Inneren des Gehäuses (10, 90, F10, P12) vorgesehen ist und zwischen dem Gehäuse (10, 90, F10, P12) und dem Aufnahmerohr (904, F14) arbeitet.

5. Stoßdämpfer nach Anspruch 1,
**dadurch gekennzeichnet,**
**dass** die Kupplungs-/Betätigungsbaugruppe (A) ein Positionierelement (20, A10, F15, G14), eine Stoßdämpfungshülse (30, A11, F16, G15), Kupplungselemente (33) und ein Steuerelement (50, A14, F19, G16) besitzt, wobei das Positionierelement (20, A10, F15, G14) im Inneren des Aufnahmerohrs (904, F14) des Gehäuses (10, 90, F10, P12) positionierbar ist, und wobei das Positionierelement (20, A10, F15, G14) einen Hohldurchgang (25, F151) und an der inneren Wand mehrere Positioniernuten (26, A101, F152, G143) aufweist, und wobei die Stoßdämpfungshülse (30, A11, F16, G15) durch das Aufnahmerohr (904, F14) der Stoßdämpfungshülse (30, A11, F16, G15) hindurchführbar ist, und wobei die Stoßdämpfungshülse (30, A11, F16, G15) innen über eine Durchgangsbohrung (31, A11, F16, G15) und in radialer Richtung über Positionierlöcher (32, A13, F163, G157) verfügt, und wobei die Positionierlöcher (32, A13, F163, G157) der Stoßdämpfungshülse (30, A11, F16, G15) nach den jeweiligen Positioniernuten (26, A101, F152, G143) des Positionierelements (20, A10, F15, G14) ausgerichtet sind, während die Stoßdämpfungshülse (30, A11, F16, G15) im Inneren des Betätigungsraums (14) des Gehäuses (10, 90, F10, P12) befindet, und wobei die Kupplungselemente (33) in den jeweiligen Positionierlöchern (32, A13, F163, G157) der Stoßdämpfungshülse (30, A11, F16, G15) gelagert und nach den jeweiligen Positioniernuten (26, A101, F152, G143) des Positionierelements (20, A10, F15, G14) ausgerichtet sind, und wobei das Steuerelement (50, A14, F19, G16) in der Durchgangsbohrung (31, A11, F16, G15) der Stoßdämpfungshülse (30, A11, F16, G15) vorgesehen und mit einem Konus (A141, F192, G161) versehen ist, mit dem das Steuerelement (50, A14, F19, G16) in einen Großabschnitt (53, A142, F193, G162) und einen Kleinabschnitt (54, A143, F194, G163) unterteilbar ist, und wobei der Großabschnitt (53, A142, F193, G162) und der Kleinabschnitt (54, A143, F194, G163) des Steuerelements (50, A14, F19, G16) gegen die Kupplungselemente (33) drückbar sind, und wobei das Steuerelement (50, A14, F19, G16) die Betätigung der Kupplungselemente (33) steuert.

6. Stoßdämpfer nach Anspruch 1,
**dadurch gekennzeichnet,**
**dass** die Steuereinheit (B) einen Sockel (60, B10, B20, E1, F20), einen Steuerzapfen (70, B11, B22, E18, F22), eine Steuerfeder (a3), eine Rückstellfeder (75, B13, B23, E17, F23, B26) und ein Anlageelement (76, B14, B27, E14, F18) aufweist, und wobei der Sockel (60, B10, B20, E1, F20) ein Steuerloch (63, B202, E12) besitzt, in dem sich ein Steuerzapfen (70, B11, B22, E18, F22) befindet, und wobei der Steuerzapfen (70, B11, B22, E18, F22) von einem durch eine Bedienperson bedienten Stahldrahtseil (72) gesteuert wird, und wobei außen am Steuerzapfen (70, B11, B22, E18, F22) eine Vertiefung (73, E185, F22) und ein Konus (74, E186, F222) ausgebildet sind, und wobei das Anlageelement (76, B14, B27, E14, F18) an seinem einen Ende mit einer Wölbung (761, F241) versehen ist, die gegen die Vertiefung (73, E185, F22) und den Konus (74, E186, F222) des Steuerzapfens (70, B11, B22, E18, F22) anliegt, während das andere Ende des Anlageelements (76, B14, B27, E14, F18) zur Anlage gegen das eine Ende des Steuerelements (50, A14, F19, G16) der Kupplungs-/Betätigungsbaugruppe (A) gebracht wird, und wobei das andere Ende des Steuerelements (50, A14, F19, G16) gegen die Steuerfeder (a3) drückbar ist, sodass das Steuerelement (50, A14, F19, G16) der Kupplungs-/Betätigungsbaugruppe (A) mithilfe der Vertiefung (73, E185, F22) und des Konus (74, E186, F222) des Steuerzapfens (70, B11, B22, E18, F22) unter Einwirkung der angesammelten Federkraft der Steuerfeder (a3) verschiebbar ist, und wobei die Kraftansammlung der Steuerfeder (a3) durch die Verschiebung des Steuerzapfens (70, B11, B22, E18, F22) erfolgt, und wobei die Betätigung des Steuerelements (50, A14, F19, G16) der Kupplungs-/Betätigungsbaugruppe (A) unter Einwirkung der angesammelten Federkraft zustande kommt.

7. Stoßdämpfer nach Anspruch 1,
**dadurch gekennzeichnet,**
**dass** die Steuereinheit (B) einen Sockel (60, B10, B20, E1, F20), einen Steuerzapfen (70, B11, B22, E18, F22), eine Steuerfeder (a3), eine Rückstellfeder (75, B13, B23, E17, F23, B26), ein Anlageelement (76, B14, B27, E14, F18) und einen Drehknopf (B12, B21, B25) aufweist, wobei der Steuerzapfen (70, B11, B22, E18, F22) unter Einwirkung der Zugkraft des Stahldrahtseils (72) in Drehbewegung versetzbar ist, und wobei der Steuerzapfen (70, B11, B22, E18, F22) einen exzentrischen Anlageabschnitt (B221) aufweist, der gegen ein Ende des Anlageelements (76, B14, B27, E14, F18) anliegt, und wobei das andere Ende des Anlageelements (76, B14, B27, E14, F18) zur Anlage gegen das Steuerelement (50, A14, F19, G16) der Kupplungs-/Betätigungsbaugruppe (A) gebracht wird, und wobei die Exzenterwelle im Steuerzapfen (70, B11, B22, E18, F22) gedreht wird und somit das Anlageelement (76, B14, B27, E14, F18) und das Steuerelement (50, A14, F19, G16) der Kupplungs-/Betätigungsbaugruppe (A) in Bewegung versetzt, und wobei die Kraftansammlung der Steuerfeder (a3) und der Rückstellfeder (75, B13, B23, E17, F23, B26) durch die Drehbewegung des Steuerzapfens (70, B11, B22, E18, F22) zustande kommt, und wobei der Steuerzapfen (70, B11, B22, E18, F22) unter Einwirkung der angesammelten Federkraft der Rückstellfeder (75, B13, B23, E17, F23, B26) in seine ursprüngliche Lage zurückkehrt, und wobei ein Ende der Steuerfeder (a3) gegen das Steuerelement (50, A14, F19, G16) drückbar ist, während das Steuerelement (50, A14, F19, G16) durch die angesammelte Federkraft betätigbar ist.

8. Stoßdämpfer nach Anspruch 1,
**dadurch gekennzeichnet,**
**dass** die Steuereinheit (B) einen Sockel (60, B10, B20, E1, F20), einen Steuerzapfen (70, B11, B22, E18, F22), eine Steuerfeder (a3), eine Rückstellfeder (75, B13, B23, E17, F23, B26) und ein Anlageelement (76, B14, B27, E14, F18) aufweist, wobei die Steuereinheit (B) mit einem Durchgangsloch (B104, F102) versehen ist, und wobei das eine Ende des Steuerzapfens (70, B11, B22, E18, F22) im Durchgangsloch (B104, F102) des Sockels (60, B10, B20, E1, F20) positionierbar ist, während das andere Ende des Steuerzapfens (70, B11, B22, E18, F22) ein Verschiebungsgewinde (B113) aufweist, und wobei das eine Ende des Anlageelements (76, B14, B27, E14, F18) mit einem Verschiebungsgewinde (B1411) versehen ist, und wobei das Verschiebungsgewinde (B1411) des Anlageelements (76, B14, B27, E14, F18) und das Verschiebungsgewinde (B113) des Steuerzapfens (70, B11, B22, E18, F22) ineinander greifen, und wobei das andere Ende des Anlageelements (76, B14, B27, E14, F18) gegen das Steuerelement (50, A14, F19, G16) der Kupplungs-/Betätigungsbaugruppe (A) anliegt, und wobei der Steuerzapfen (70, B11, B22, E18, F22) von einem durch eine Bedienperson bedienten Stahldrahtseil (72) gesteuert wird, und wobei der Steuerzapfen (70, B11, B22, E18, F22) unter Einwirkung der Zugkraft des Stahldrahtseils (72) in Drehbewegung versetzbar ist, und wobei die Betätigung des Steuerzapfens (70, B11, B22, E18, F22) der Kupplungs-/Betätigungsbaugruppe (A) durch die Verschiebung des Anlageelements (76, B14, B27, E14, F18) zustande kommt, und wobei der Steuerzapfen (70, B11, B22, E18, F22) unter Einwirkung der angesammelten Federkraft der Rückstellfeder (75, B13, B23, E17, F23, B26) in seine ursprüngliche Lage zurückkehrt, und wobei ein Ende der Steuerfeder (a3) gegen das Steuerelement (50, A14, F19, G16) drückbar ist, während das Steuerelement (50, A14, F19, G16) durch die angesammelte Federkraft betätigbar ist.

9. Stoßdämpfer nach Anspruch 1,
**dadurch gekennzeichnet,**
**dass** die Steuereinheit (B) einen Sockel (60, B10, B20, E1, F20), einen Steuerzapfen (70, B11, B22, E18, F22), eine Steuerfeder (a3), eine Rückstellfeder (75, B13, B23, E17, F23, B26) und ein Anlageelement (76, B14, B27, E14, F18) aufweist, wobei der Anlageabschnitt (B221) des Steuerzapfens (70, B11, B22, E18, F22) gegen das erste Ende des Anlageelements (76, B14, B27, E14, F18) anliegt, während das andere Ende des Anlageelements (76, B14, B27, E14, F18) zur Anlage gegen das Steuerelement (50, A14, F19, G16) der Kupplungs-/Betätigungsbaugruppe (A) kommt, und wobei die Exzenterwelle im Steuerzapfen (70, B11, B22, E18, F22) drehbar ist sowie gleichzeitig den Steuerzapfen (70, B11, B22, E18, F22) und das Steuerelement (50, A14, F19, G16) der Kupplungs-/Betätigungsbaugruppe (A) in Bewegung versetzt.

## Revendications

1. Un amortisseur comprenant un corps de base, un ensemble d'embrayage, un ensemble de contrôle et un ressort amortissant les chocs, ce dernier élément fournissant la force élastique amortisseuse pour les différents éléments de l'amortisseur, où :
l'ensemble d'embrayage comprend une pièce de positionnement, un tube axial, une pièce d'embrayage et un élément de contrôle ;
la pièce de positionnement est formée de plusieurs rainures de positionnement ;
le tube axial comprend plusieurs trous de positionnement ;
la pièce de positionnement et le tube axial sont disposés de façon télescopique ;
la pièce d'embrayage est reçue dans les trous de positionnement du tube axial ; l'élément de contrôle présente un pas annulaire de forme conique qui sépare l'élément de contrôle en une partie à grand diamètre et une partie à petit diamètre, ces deux parties servant à faire bouger la pièce d' embrayage ;
le mouvement de la pièce d'embrayage produit un glissement relatif et un engagement entre la pièce de positionnement et le tube axial, enclenchant/désenclenchant ainsi la fonction d'absorption des chocs de l'amortisseur.

2. l'amortisseur de chocs tel que revendiqué au point 1, où :
l'un des bouts du corps de base est fixé au cadre du vélo et l'autre bout comprend un embout qui communique avec une espace intérieur au corps de base ;
l'ensemble d'embrayage comprend une pièce de positionnement, un tube axial, une pièce d'embrayage et un élément de contrôle, la pièce de positionnement est disposée dans l'espace du corps de base et présente un trou traversant ;
la pièce de positionnement et le tube axial sont disposés de façon télescopique, la pièce d'embrayage est reçue dans les trous de positionnement du tube axial et correspond aux rainures de positionnement de la pièce de positionnement ;
l'élément de contrôle est disposé dans le trou traversant du tube axial et présente un pas annulaire de forme conique qui sépare l'élément de contrôle en une partie à grand diamètre et une partie à petit diamètre, ces deux parties servant à abuter contre la pièce d'embrayage, l'élément de contrôle contrôlant ainsi le mouvement de la pièce d'embrayage ;
l'ensemble de contrôle est positionné sur le cadre d'un vélo et connecté au bout du tube axial ;
l'ensemble de contrôle comprend un arbre de contrôle et un ressort de contrôle ; l'arbre de contrôle est contrôlé par une corde en acier ;
l'arbre de contrôle et le ressort de contrôle font bouger l'élément de contrôle de l'ensemble d'embrayage ;
le ressort absorbeur de chocs est monté à l'extérieur du corps de base et placé de biais entre l'ensemble de contrôle et le corps de base.

3. L'amortisseur de choc te que revendiqué au point 1, où:
l'ensemble d'embrayage comprend une pièce de positionnement, un tube axial et un élément de contrôle ;
l'extérieur de la pièce de positionnement est pourvu de rainures de positionnement ;
le tube axial comprend un trou traversant et présente des trous de positionnement sur sa surface extérieure;
la pièce de positionnement et le tube axial sont disposés de façon télescopique;
le tube axial est reçu dans l'espace du corps de base ;
la pièce d'embrayage est reçu dans les trous de positionnement du tube axial et
correspond aux rainures de positionnement de la pièce de positionnement ;
l'élément de contrôle est monté à l'extérieur du tube axial et comprend un pas annulaire de forme conique qui sépare l'élément de contrôle en une partie à grand diamètre et une partie à petit diamètre, ces deux parties servant à abuter contre la pièce d'embrayage, l'élément de contrôle contrôlant ainsi le mouvement de la pièce d'embrayage.

4. L'amortisseur de chocs tel que revendiqué au point 1, où :
l'un des bouts du corps de base est fixé au cadre d'un vélo et l'autre bout est reçu dans un tube ;
l'un des bouts de ce tube est disposé de façon à pouvoir bouger dans le corps de base, et l'autre bout est fixé à une position correspondante sur le cadre du vélo ;
le tube de réception peut bouger relativement au corps de base ;
l'ensemble d'embrayage comprend une pièce de positionnement, un tube axial, une pièce d'embrayage et un élément de contrôle ;
la pièce de positionnement est disposée dans le corps de base et présente des rainures de positionnement à sa surface extérieure ;
le tube axial est disposé dans le tube de réception du corps de base, le trou traversant du tube axial permettant cette insertion ;
les trous de positionnement apparaissent sur la surface extérieur du tube axial et correspondent aux rainures de positionnement de la pièce de positionnement ;
la pièce d'embrayage est reçue dans le dans le trou de positionnement du tube axial ; l'élément de contrôle est monté à l'extérieur du tube axial et comprend un pas annulaire de forme conique qui sépare l'élément de contrôle en deux parties, l'une à grand diamètre, l'autre à petit diamètre, ces deux parties servant à abuter contre la pièce d'embrayage, l'élément de contrôle contrôlant ainsi la pièce d'embrayage ; l'ensemble de contrôle est positionné à l'un des bouts du tube de réception du corps de base ;
le ressort amortisseur de chocs est réceptionné dans le corps de base et placé de biais entre l'ensemble de contrôle et le corps de base.

5. L'amortisseur de chocs tel que revendiqué au point 1, où :
l'ensemble d'embrayage comprend une pièce de positionnement, un tube axial, une pièce d'embrayage et un élément de contrôle ;
la pièce de positionnement est disposée dans le tube de réception du corps de base et présente un trou traversant ;
la pièce de positionnement comprend des rainures de positionnement en son sein ;
le tube axial est disposé dans le tube de réception du corps de base ;
le tube axial est creux et comprend un trou traversant ;
on trouve les trous de positionnement sur la surface extérieure du tube axial, ils correspondent aux rainures de positionnement de la pièce de positionnement ;
le tube axial est disposé dans le corps de base ;
la pièce d'embrayage est reçue dans le trou de positionnement du tube axial et correspond aux rainures de positionnement de la pièce de positionnement ;
l'élément de contrôle est reçu dans le trou traversant du tube axial et comprend un pas annulaire de forme conique qui sépare l'élément de contrôle en deux parties, l'une à grand diamètre, l'autre à petit diamètre, ces deux parties servant à abuter contre la pièce d'embrayage, l'élément de contrôle contrôlant ainsi la mouvement de la pièce d'embrayage ;

6. l'amortisseur tel que revendiqué au point 1, où :
l'ensemble de contrôle comprend un corps de base, un arbre de contrôle, un ressort de contrôle, un ressort à mouvements rétro et une pièce de butée ;
le corps de base comprend un trou de contrôle pour recevoir l'arbre de contrôle ; l'arbre de contrôle est sous contrôle d'un câble en acier, qui est lui-même contrôlé par l'utilisateur ;
le contour extérieur de l'arbre de contrôle comprend une rainure et une surface annulaire de forme conique ;
l'un des bouts de la pièce de butée comprend une surface arquée qui est utilisée pour abuter contre la rainure et la surface annulaire de forme conique, l'autre bout de la pièce de butée bute contre l'un des bouts de l'élément de contrôle de l'ensemble d'embrayage, tandis que l'autre bout de l'élément de contrôle vient buter contre le ressort de contrôle ;
grâce à la rainure et à la surface annulaire de forme conique, l'arbre de contrôle peut travailler avec le ressort de contrôle pour faire bouger l'élément de contrôle de l'ensemble d'embrayage ;
le mouvement de l'arbre de contrôle compresse le ressort de contrôle qui vient ensuite faire bouger l'élément de contrôle de l'ensemble d'embrayage grâce à la force élastique compressée.

7. L'amortisseur tel que revendiqué au point 1, où :
l'ensemble de contrôle comprend le corps de base, l'arbre de contrôle, le ressort de contrôle, le ressort à rétro-mouvements, la pièce de butée et un bouton circulaire ;
le corps de base comprend un trou de contrôle pour recevoir l'arbre de contrôle ; l'arbre de contrôle est en mesure de tourner après avoir été tiré par le câble en acier; l'arbre de contrôle comprend une partie de butée excentrée qui est utilisée pour buter contre l'un des bouts de la pièce de butée, l'autre bout de la pièce de butée sert à buter contre l'élément de contrôle de l'ensemble d'embrayage, après quoi la rotation de l'arbre de contrôle compresse le ressort de contrôle et le ressort à rétro-mouvement, ce dernier repoussant l'arbre de contrôle à sa position originale grâce à la force élastique compressée ;
l'un des bouts du ressort de contrôle vient buter contre l'élément de contrôle et fait ainsi bouger l'élément de contrôle grâce à la force élastique compressée.

8. L'amortisseur de chocs tel que revendiqué au point 1, où :
l'ensemble de contrôle comprend un corps de base, l'arbre de contrôle, le ressort de contrôle, le ressort à rétro-mouvement, et la pièce de butée ;
le corps de base comprend un trou traversant pour recevoir l'un des bouts de l'arbre de contrôle, l'autre bout de l'arbre de contrôle présente des rainures d'entraînement ; l'un des bouts de la pièce de butée comprend des rainures d'entraînement qui sont engrenées avec les rainures d'entraînement de l'arbre de contrôle dans un but de transmission du mouvement, l'autre bout de la pièce de butée vient buter contre l'élément de contrôle de l'ensemble d'embrayage ;
l'arbre de contrôle est sous le contrôle du câble en acier, qui est lui-même contrôlé par l'utilisateur ;
la rotation de l'arbre de contrôle met la pièce de butée en mouvement, ce qui fait bouger l'élément de contrôle, le ressort à rétro-mouvement repousse l'arbre de contrôle à sa position originale grâce à la force élastique compressée, l'un des bouts du ressort de contrôle vient buter contre l'élément de contrôle, et le ressort de contrôle fait bouger l'élément de contrôle grâce à la force élastique compressée.

9. L'amortisseur de chocs tel que revendiqué au point 1, où :
L'ensemble de contrôle comprend le corps de base, l'arbre de contrôle, le ressort de contrôle, le ressort à rétro-mouvement et la pièce de butée ;
La partie excentrée de l'arbre de contrôle vient buter contre l'un des bouts de la pièce de butée, l'autre bout de la pièce de butée vient buter contre l'élément de contrôle de l'ensemble d'embrayage ;
La partie de butée excentrée tournera pendant la rotation de l'arbre de contrôle et fera bouger simultanément la pièce de butée et le l'élément de contrôle de l'ensemble d'embrayage.
